(19) Europäisches Patentamt
European Patent Office
Office européen des brevets

(11) **EP 2 686 542 B1**

(12) **FASCICULE DE BREVET EUROPEEN**

(45) Date de publication et mention
de la délivrance du brevet:
**28.06.2017 Bulletin 2017/26**

(21) Numéro de dépôt: **12709839.0**

(22) Date de dépôt: **13.03.2012**

(51) Int Cl.:
*F03B 5/00* *(2006.01)* *F03B 17/06* *(2006.01)*
*F03B 13/22* *(2006.01)*

(86) Numéro de dépôt international:
**PCT/EP2012/054405**

(87) Numéro de publication internationale:
**WO 2012/123465 (20.09.2012 Gazette 2012/38)**

(54) **GENERATEUR HYDROLIEN**

FLUIDENERGIEERZEUGER

FLUID ENERGY GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.03.2011 FR 1152067**

(43) Date de publication de la demande:
**22.01.2014 Bulletin 2014/04**

(73) Titulaire: **EEL ENERGY**
**75005 Paris (FR)**

(72) Inventeur: **DREVET, Jean-Baptiste**
**75005 Paris (FR)**

(74) Mandataire: **Parzy, Benjamin Alain et al**
**Cabinet Boettcher**
**16, rue Médéric**
**75017 Paris (FR)**

(56) Documents cités:
**WO-A1-82/00321** **WO-A1-2008/066553**
**WO-A2-2010/012888** **CA-A1- 2 675 947**
**US-A1- 2008 297 119**

## Description

L'invention concerne le domaine des dispositifs de récupération d'énergie dans un écoulement de fluide.

En particulier l'invention concerne un dispositif de récupération d'énergie dans un écoulement de fluide comportant :

- un support ;
- une membrane souple,
- un système d'accroche d'au moins une première zone de la membrane reliant cette première zone de la membrane au support ;
- des moyens de transmission d'efforts reliés à une seconde zone de la membrane éloignée de la première zone de membrane, cette seconde zone de la membrane étant mobile par rapport au support.

De tels dispositifs sont utilisés pour récupérer de l'énergie dans un écoulement fluide tel que de l'air ou de l'eau, et pour transmettre cette énergie récupérée sous la forme d'une énergie mécanique (c'est-à-dire une force associée à un déplacement / vitesse) vers un autre élément tel qu'un convertisseur adapté à convertir l'énergie mécanique transmise en énergie électrique.

On connaît du document brevet WO82/00321 un tel dispositif de récupération d'énergie du type précité. Ce dispositif de l'art antérieur est un aérogénérateur qui comporte un conduit aérien formé de deux flasques entre lesquels une membrane est maintenue tendue selon une direction inscrite dans le plan de la membrane et perpendiculaire à la direction du flux d'air. La membrane devient le support d'une vibration transversale, sous l'action du vent, et le mouvement transversal de la partie centrale de la membrane est alors utilisé pour actionner un dispositif de production d'électricité. Le document CA 2675947 divulgue un autre dispositif de ce type. Compte tenu des investissements à réaliser pour installer des dispositifs de récupération d'énergie dans des écoulements, notamment en milieu marin, il est souhaitable d'envisager des solutions alternatives permettant au moins dans certaines conditions d'augmenter la performance de captation d'énergie dans un écoulement donné.

## OBJET DE L'INVENTION

L'invention a pour objet un dispositif de récupération d'énergie conforme à la définition générique précitée et permettant d'avoir une performance de récupération d'énergie améliorée au moins dans certains types d'écoulements.

## BREVE DESCRIPTION DE L'INVENTION

En vue de la réalisation de ce but, l'invention concerne principalement un dispositif de récupération d'énergie dans un écoulement de fluide comportant :

- un support ;
- une membrane souple,
- un système d'accroche d'au moins une première zone de la membrane reliant cette première zone de la membrane au support ;
- un convertisseur d'énergie ;
- des moyens de transmission d'efforts reliés à une seconde zone de la membrane éloignée de la première zone de membrane, cette seconde zone de la membrane étant mobile par rapport au support, et ces moyens de transmission d'efforts étant agencés pour transmettre de l'énergie mécanique de la seconde zone vers le convertisseur d'énergie..

Ce dispositif de l'invention est essentiellement caractérisé en ce qu'il comporte des moyens de limitation d'éloignement, adaptés à limiter l'éloignement de la première zone de membrane par rapport à au moins un premier point du système d'accroche et à limiter l'éloignement de la seconde zone de membrane par rapport à un second point du système d'accroche, ces moyens de limitation de l'éloignement étant tels que les première et seconde zones soient espacées l'une de l'autre d'une distance minimale inférieure à la longueur la plus courte séparant ces première et seconde zones mesurée le long d'une face de la membrane, ces moyens de limitation de l'éloignement favorisant ainsi un mouvement d'ondulation de la membrane lorsque celle-ci est placée dans ledit écoulement de fluide, la membrane souple présentant une raideur élastique longitudinale s'opposant à sa flexion entre ses première et seconde zones. De façon générale, la distance minimale d'espacement entre les première et seconde zones est la distance la plus courte mesurée selon une ligne droite s'étendant entre ces première et seconde zones alors qu'elles sont écartées l'une de l'autre avec les moyens de limitation d'éloignement limitant cet éloignement entre ces première et seconde zones.

De même, la longueur la plus courte séparant les première et seconde zones mesurée le long d'une face de la membrane est la plus courte pouvant être mesurée entre ces première et seconde zones en suivant la face de la membrane. Typiquement cette longueur la plus courte correspond à la développée de la courbe d'intersection entre :

- un plan de section longitudinale de la membrane passant par les première et seconde zones ; et
- la face de la membrane le long de laquelle on effectue la mesure.

Ainsi selon l'invention, la membrane a une longueur développée supérieure à la distance séparant ses première et seconde zones de telle manière que cette membrane ne soit pas tendue entre ces première et seconde zones.

Ainsi, lorsque la membrane est placée au repos ou dans un écoulement de fluide, celle-ci se retrouve courbée sur au moins une portion de sa longueur située entre ses première et seconde zones.

Cette flexion / courbure de membrane existe car, du fait des moyens de limitation d'éloignement, la longueur développée de la membrane est supérieure à la distance minimale séparant les première et seconde zones de la membrane.

Dans son fonctionnement, lorsque le dispositif est plongé dans un écoulement de fluide s'écoulant à une vitesse donnée Vf, la membrane souple et courbée (car non tendue) s'anime d'un mouvement d'ondulation et les moyens de limitation d'éloignement limitent l'écartement des première et deuxième zone de membrane de manière que la membrane ne puisse pas se tendre de manière rectiligne sur toute sa longueur. La membrane résiste à l'écoulement au moins tant que cet écoulement ne dépasse pas une vitesse limite.

En effet, lorsque la membrane est soumise aux efforts d'écoulement de la veine fluide, cette dernière exerce une surpression sur le côté incident vis-à-vis de l'écoulement de chacune des courbures de la membrane et une dépression sur la face opposée sur le côté interne de chacune de ces courbures. Ce différentiel de pression a tendance à pour une part entraîner la déformation de la membrane dans le sens de la veine fluide, et d'autre part, pour une même position, à déformer la portion courbée jusqu'à inverser sa courbure de la membrane. Ainsi sous l'effet de la veine fluide, la membrane ondule selon une forme alternative quasi sinusoïdale. Cette ondulation forcée de la membrane se propage et se renforce de la première zone vers la seconde zone de membrane à une vitesse Vm.

On constate que lorsque le dispositif est plongé dans l'écoulement de fluide dans lequel on souhaite prélever de l'énergie, la membrane ondule et sa seconde zone dite zone en aval s'anime d'un mouvement passant tour à tour d'un côté et d'un autre d'un axe d'écoulement passant par le premier et /ou le second point du système d'accroche.

On constate que la multiplicité des courbures, donc des fronts d'ondes multiplie les capacités de captation d'énergie. De plus la membrane perturbe une veine fluide de section supérieure à la section représentant la largeur de la membrane par l'amplitude de l'onde, ainsi elle capte l'énergie du fluide dans un espace bien supérieur à son encombrement.

Comme les moyens de transmission d'efforts sont reliés à cette seconde zone de la membrane, on peut capter la résultante des efforts du fluide sur l'ensemble de la membrane et ainsi de prélever de l'énergie dans l'écoulement de fluide.

Il est à noter que les premier et second points du système d'accroche peuvent être distincts ou confondus entre eux. Ces premiers et second points sont prévus pour autoriser un pivotement d'une partie au moins des moyens de limitation par rapport au système d'accroche.

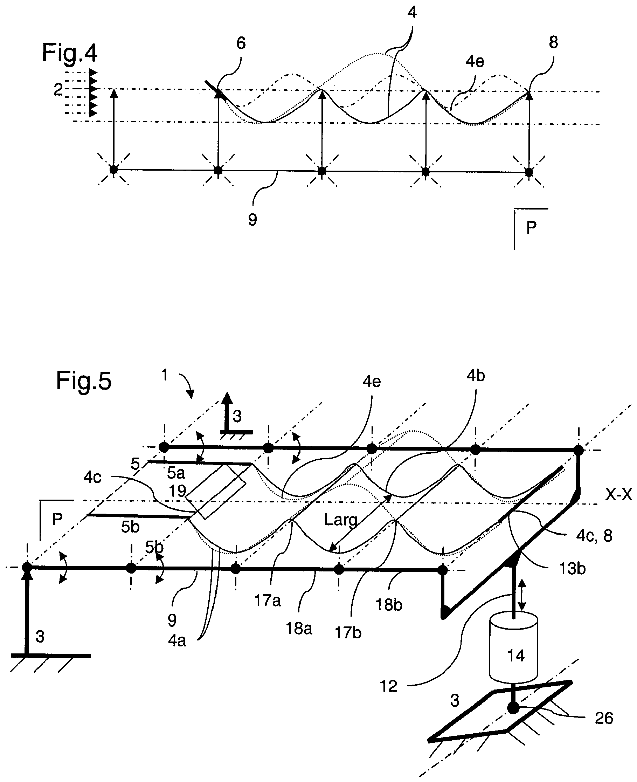

Pour la compréhension de l'invention, le terme membrane au repos désigne un état dans lequel la membrane n'est pas soumise à l'écoulement fluide et est soumise à la gravité terrestre et aux moyens de limitation. Du fait des moyens de limitation qui limitent l'écartement des première et seconde zones de la membrane par rapport à des points du système d'accroche, on constate, en particulier lorsque la membrane est au repos, que celle-ci est fléchie, courbée sous l'effet de la gravité (voir figures 4 et 5), des moyens de limitation, et sur au moins une partie de la membrane située entre ses première et seconde zones.

Pour la mise en oeuvre du dispositif selon l'invention, on fait préférentiellement en sorte que les moyens de limitation de l'éloignement soient tels que les première et seconde zones soient espacées l'une de l'autre d'une distance minimale inférieure à 95% de la longueur la plus courte séparant ces première et seconde zones mesurée le long d'une face de la membrane.

On a remarqué que la performance de captation d'énergie du dispositif de l'invention s'améliore dès lors que les première et seconde zones sont espacées l'une de l'autre d'une distance minimale inférieure à 95% de la longueur séparant les première et seconde zones mesurée le long d'une face de la membrane. En effet, en augmentant jusqu'à un certain niveau le différentiel entre :

- la distance minimale de la longueur de membrane mesurée entre les première et seconde zones de membrane ; et
- la longueur développée minimale de cette membrane mesurée entre ces première et seconde zones ;

on constate que l'amplitude des ondes formées par la membrane soumise à l'écoulement tend à augmenter.

Or pour tout écoulement donné, la quantité d'énergie récupérée dépend de cette amplitude.

On note que les performances de la captation d'énergie du dispositif sont accrues grâce au fait que l'ondulation de la membrane est forcée grâce aux moyens de limitation d'éloignement qui définissent un paramètre influant de la vitesse d'ondulation de membrane soumise à une vitesse de fluide donnée. En particulier on constate que grâce à l'invention on obtient un ratio vitesse de fluide Vf par la vitesse de l'onde de membrane Vm qui reste sensiblement constant sur une plage de vitesse de fluide donnée.

Ce ratio dépend de l'éloignement des première et seconde zones qui est ajusté via les moyens de limitation d'éloignement, de la force de réaction du convertisseur d'énergie et des caractéristiques mécaniques de la membrane.

On fait préférentiellement en sorte que ce ratio soit ajusté à 1/3 pour maximiser la captation d'énergie dans l'écoulement.

On note aussi que pour améliorer les performances du dispositif les moyens de limitation d'éloignement et le système d'accroche sont tels que le bord de membrane situé en vis-à-vis du système d'accroche puisse osciller à distance des premier et second points du système d'accroche.

## BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

- la figure 1 présente un premier mode de réalisation du dispositif selon l'invention placé dans l'écoulement dans lequel il récupère de l'énergie via un convertisseur adapté à générer de l'énergie électrique à partir d'un mouvement de translation ;
- la figure 2 présente un second mode de réalisation de l'invention également placé dans un écoulement pour y récupérer de l'énergie, mais utilisant un convertisseur rotatif pour générer de l'électricité à partir d'un mouvement rotatif ;
- la figure 3 présente un mode de réalisation de l'invention dans lequel les moyens de limitation d'éloignement de zones de la membrane sont des moyens élastiques ayant des raideurs respectives décroissantes en allant dans le sens de l'écoulement ;

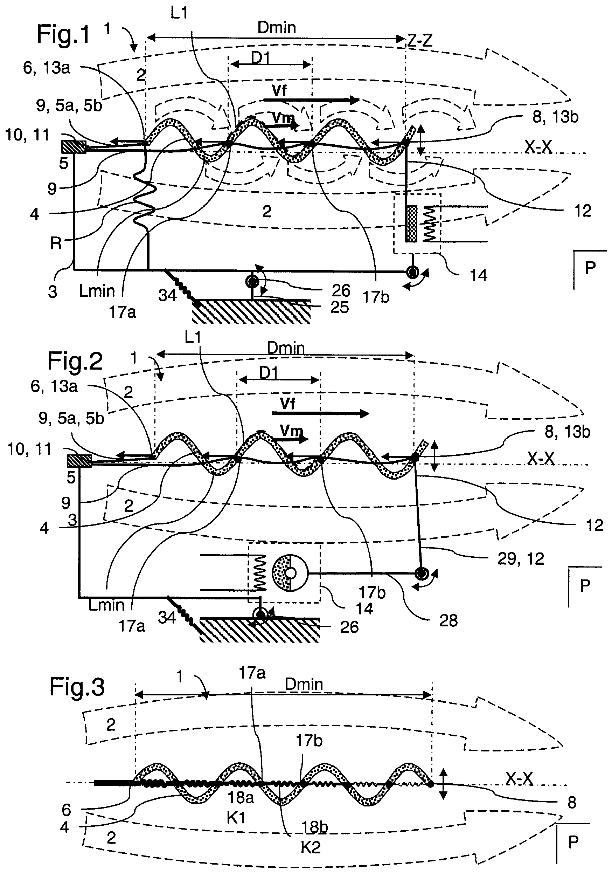

- la figure 4 présente, comme pour les figures 1 à 3, une vue schématique du dispositif de l'invention selon un plan P de coupe longitudinale de la membrane, cette figure 4 montre en trait plein un premier type de membrane au repos qui fléchie entre ses zones de liaison avec les dispositifs de limitation d'éloignement ; on voit aussi sur cette figure 4, en pointillés un second type de membrane au repos qui présente une raideur supérieure à la membrane du premier type (préférentiellement, la membrane du premier type est remplacée par la membrane du second type qui, au repos, forme une sinusoïde) ; on voit également sur cette figure 4 une courbe en traits mixtes qui représente l'une ou l'autre de ces première ou seconde membranes ondulant dans l'écoulement 2 ;
- la figure 5 présente une vue en perspective du dispositif selon l'invention selon un mode de réalisation comportant un convertisseur 14 de mouvement de translation en énergie électrique et comportant un déflecteur de tête 19, sur cette figure la membrane 4 est au repos (en trait plein la membrane du premier type et en pointillés la membrane du second type) ;
- la figure 6 présente le dispositif de l'invention placé dans un écoulement, et présentant une membrane ondulant entre ses deux seules zones de liaison avec les moyens de limitation d'éloignement, c'est-à-dire entre la première zone de membrane qui est placée en amont et sa deuxième zone de liaison placée en aval dans le sens de l'écoulement ;
- la figure 7 présente le dispositif de l'invention dans un mode où il présente des moyens de limitation d'éloignement reliés à plusieurs points intermédiaires d'attache à la membrane, ces points intermédiaires sont placés le long de bords longitudinaux de la membrane entre les première et seconde zones de la membrane qui sont respectivement situées le long des bords amont et aval respectifs ;
- la figure 8 présente un mode de réalisation du dispositif de l'invention avec un bras de levier 28 reliant la seconde zone de membrane à un convertisseur rotatif et ayant un support 3 orienté par rapport à des moyens de positionnement lestés 25b ;
- la figure 9 présente un autre mode de réalisation du dispositif selon l'invention dans lequel le support est relié par une articulation d'axe horizontal 32 à des moyens de positionnement lestés 25b, dans ce mode de réalisation des déflecteurs de support longitudinaux 27a sont fixés au support 3 pour guider la veine fluide le long des bords latéraux 4a, 4b de la membrane et des déflecteurs de support transversaux 27b sont fixés au support 3 pour orienter le support 3 dans l'écoulement ;
- la figure 10 présente un autre mode de réalisation du dispositif selon l'invention dans lequel le support 3 est orienté par rapport aux moyens de positionnement lestés 25b via une articulation d'axe vertical 33 ;
- la figure 11 présente un mode de réalisation du dispositif selon l'invention dans lequel le support 3 est relié à des moyens de positionnement du dispositif dans son environnement qui sont flottants 25a ;

- la figure 12 présente un mode alternatif de réalisation du dispositif selon l'invention comportant deux membranes oscillantes 4a, 4b autour d'un axe du support B-B portant un convertisseur rotatif 14 d'axe propre de rotation confondu avec l'axe du support B-B ;
- la figure 13 présente une portion du dispositif de l'invention utilisée pour mettre en oeuvre l'invention dans ses modes de réalisation des figures 7 et 8, la membrane reliée à ses moyens de limitation d'éloignement par ses première et seconde zones et par des points intermédiaires d'attache de la membrane placés entre les première et seconde zones de la membrane ;
- la figure 14 présente une portion du dispositif de l'invention utilisée pour mettre en oeuvre l'invention selon son mode de réalisation de la figure 3 selon lequel les moyens de limitation d'éloignement sont élastiques et ont plusieurs raideurs K1, K2, K3 pour réduire le risque de dégradation de la membrane par un écoulement trop puissant ;
- la figure 15, présente un mode de réalisation de la membrane où l'on voit que la membrane est équipée d'un déflecteur de tête 19 placé le long d'un bord transversal amont de la membrane et d'un déflecteur de queue 20 placé le long d'un bord aval de la membrane ;
- la figure 16 montre un mode de réalisation de membrane selon lequel la membrane porte un renfort longitudinal 23 s'étendant le long de la membrane entre ses première et seconde zones de membrane pour renforcer la résistance à la flexion de la membrane selon des flexion de la membrane autour d'axes perpendiculaires au plan P de section longitudinale de la membrane ;
- la figure 17 présente un mode de réalisation de membrane utilisable pour la mise en oeuvre du dispositif selon l'invention et comportant des renforts longitudinaux 23 pour transmettre l'énergie de déformation le long de la membrane et des renforts transversaux 24 pour limiter déformations transversales de la membrane ;
- la figure 18 illustre une membrane comportant des bossages longitudinaux 23 sur une face au moins de la membrane pour guider l'écoulement de fluide le long de la membrane ;
- la figure 19 illustre une membrane comportant des bossages transversaux 21 permettant de former des limitations à l'écoulement de fluide le long de la membrane et créant des amorces d'ondulations longitudinales de la membrane ;
- la figure 20 montre une membrane équipée de convertisseurs embarqués d'un premier type 16a dit convertisseur par translation d'aimants relativement à des bobines ;
- la figure 21 montre une membrane équipée de convertisseurs embarqués d'un second type 16b dit convertisseur rotatif comportant plusieurs générateurs rotatifs reliés entre aux pour capter de l'énergie sur des ondes de déformations longitudinales de la membrane.
- la figure 22 illustre différents modes ondulatoires de membranes de dispositifs selon l'invention alors qu'elles sont placées dans un écoulement ;
- les figures 23 et 24 illustrent des membranes pour la mise en oeuvre du dispositif de l'invention, ces membranes au repos s'étendant à plat ;
- la figure 25a illustre une vue de côté d'un dispositif selon l'invention alors qu'il n'est soumis à aucun écoulement, sa membrane maintenue par les moyens de limitation d'écartement forme, du fait de sa rigidité, une demi-onde. Une suspension R assure une force de rappel et un centrage du bord amont de la membrane ;
- la figure 25b illustre le dispositif de la figure 25a alors qu'il est soumis à un écoulement de vitesse Vf, une onde de déformation de la membrane est générée par l'écoulement et se propage de l'amont vers l'aval de la membrane à une vitesse Vm ;
- la figure 26 est une vue de côté d'un autre mode de réalisation du dispositif selon l'invention alors qu'il est placé dans un écoulement de vitesse Vf.

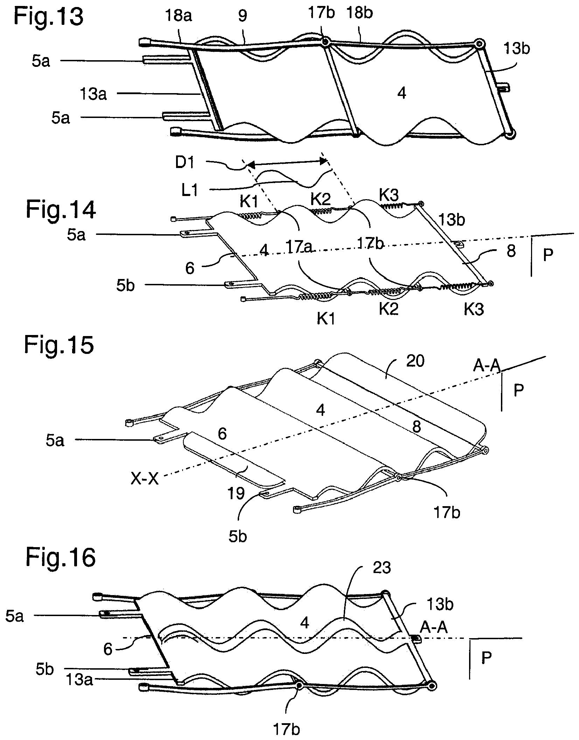

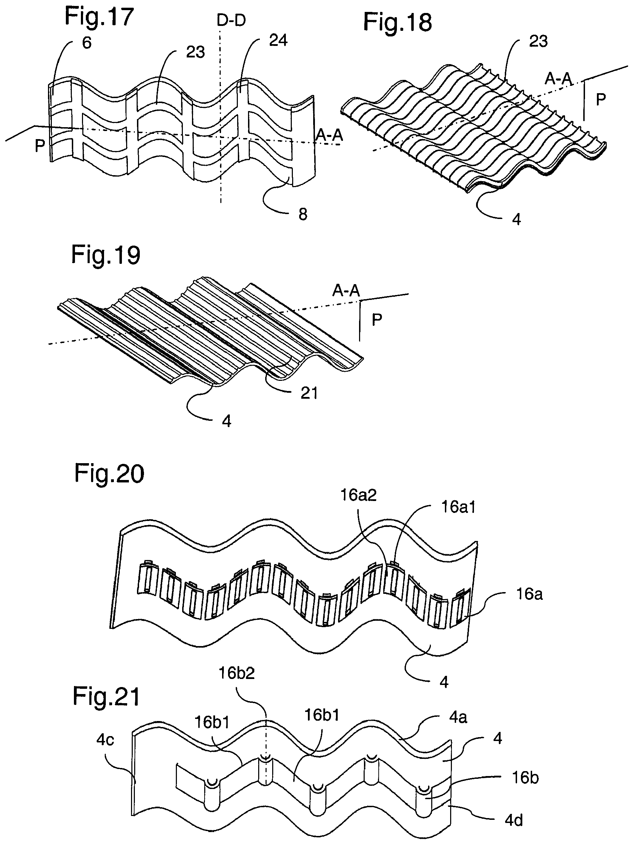

La description ci-après présente différents modes de réalisations du dispositif de l'invention 1 (figures 1-12, 25a, 25b et 26) et différents modes de réalisations de membranes et / ou de moyens de limitation d'éloignement de zones de ces membranes (figures 13-19) et deux modes de réalisation de convertisseurs embarqués sur membranes (figures 20 et 21). On note que chacun des éléments des figures 13 à 21 peuvent être combinés avec n'importe lequel des modes de réalisation de dispositifs selon l'invention décrits aux figures 1-12, 25a, 25b, 26.

Dans la description qui suit, le fluide en écoulement considéré est un liquide tel que de l'eau, et le dispositif 1 est une hydrolienne prévue pour récupérer de l'énergie mécanique dans l'écoulement de fluide et générer de l'électricité à l'aide d'un convertisseur 14.

Le dispositif 1 des figures 1 à 12 comporte :

- un support 3 ;
- une membrane souple 4 ayant une longueur développée Lmin ; et
- un système d'accroche 5 de la membrane reliant une première zone 6 de la membrane au support 3.

Ce système d'accroche 5 a pour but de réaliser un assemblage déformable reliant une première zone de membrane 6 à une partie du système d'accroche qui est fixée au support 3, en l'occurrence la partie fixe du système d'accroche par rapport au support 3.

Le système d'accroche 5 comporte deux liens 5a, 5b qui sont attachés d'une part à la première zone 6 de la membrane 4 et attachés d'autre part à la partie du système d'accroche qui est fixée au support.

Ces liens 5a, 5b du système d'accroche prépositionnent la première zone de la membrane par rapport au support tout en autorisant le déplacement relatif de cette première zone par rapport au support.

Un lien souple 5a, 5b peut comporter des câbles permettant d'ajuster l'éloignement de la première zone 6 de la membrane par rapport à la partie des moyens d'accroche 5 qui est fixe vis-à-vis de support 3.

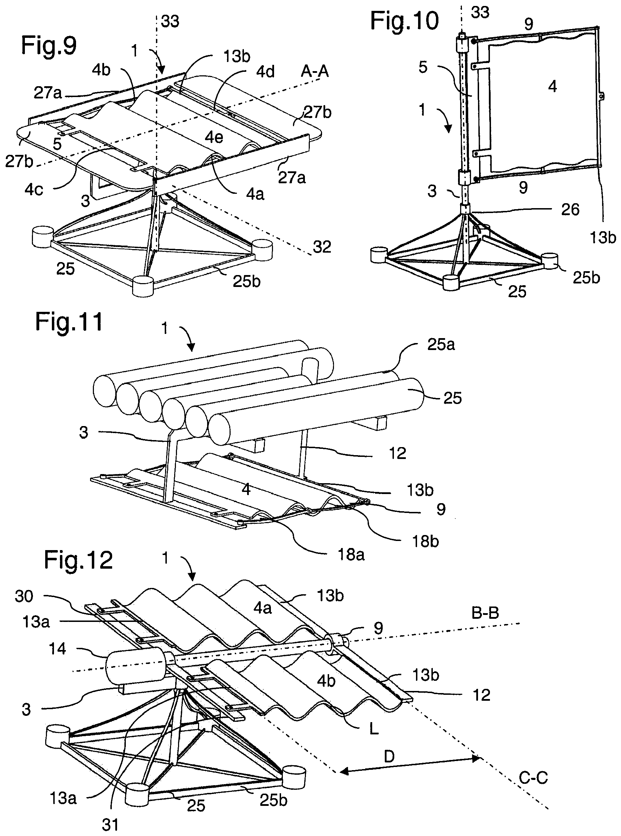

Comme on le voit sur les modes de réalisation des figures 12 et 13, le système d'accroche 5 peut comporter une tige de liaison 13a, appelée tige de liaison amont 13a. Cette tige de liaison amont 13a est reliée fixement à la membrane au niveau de la première zone de membrane qui en l'occurrence se trouve le long du bord amont 4c de la membrane.

Le dispositif comporte en outre des moyens de limitation d'éloignement 9 qui sont aussi formés par de liens souples et qui ont pour fonction de :

- limiter l'éloignement relatif de la première zone 6 de membrane vis-à-vis d'un point du premier point 10 du système d'accroche qui est préférentiellement fixe par rapport au support 3 ;
- limiter l'éloignement d'une seconde zone de membrane 8 par rapport à un second point 11 du système d'accroche qui est préférentiellement fixe par rapport au support ; et

limiter l'espacement des première et seconde zones 6, 8 de la membrane l'une par rapport à l'autre de manière que la membrane au repos soit courbée entre ses première et seconde zones.

On note que la partie fixe du système d'accroche 5 porte les premier et second points 10, 11 par rapport auxquels sont limités les distances d'éloignement des première et seconde zones de la membrane 6, 8.

Les moyens de limitation rapprochent les première et seconde zones 6, 8 l'une de l'autre de manière que la distance minimale Dmin mesurée entre ces zones 6, 8 soit inférieure à la longueur de membrane minimale Lmin mesurée le long d'une face 4e de la membrane (c'est-à-dire la longueur développée de la membrane) entre ces zones 6, 8.

Dmin est au moins inférieur à 95% de Lmin et préférentiellement inférieur à la moitié de Lmin.

On a remarqué que la performance de captation d'énergie du dispositif de l'invention s'améliore dès lors que les première et seconde zones sont espacées l'une de l'autre d'une distance minimale Dmin inférieure à 95% de Lmin.

Ainsi la membrane est forcée à se courber entre les première et seconde zones 6, 8 et forcée à onduler lorsqu'elle est plongée dans un écoulement de fluide.

La fixation des dimensions Dmin et Lmin permet de paramétrer le mouvement ondulatoire de la membrane dans un écoulement (amplitude maximale, longueur d'onde maximale, fréquence et ratio entre la vitesse du fluide dans l'écoulement Vf et la vitesse de l'onde de membrane Vm).

Pour limiter ces dimensions Dmin et Lmin, on utilise des câbles tendus formant une partie au moins des moyens de limitation.

La première zone de membrane 6 s'étend sur toute la largeur larg de la membrane le long d'un bord transversal amont 4c de la membrane, perpendiculairement à un plan de section longitudinale P de la membrane. Cette première zone 6 est limitée en largeur par la projection, dans le plan P et selon une direction de projection perpendiculaire à ce plan P, de la ou des jonctions de la membrane avec le ou les moyens d'accroche de la membrane qui sont le plus proche du bord de la membrane destiné à être placé en amont dans l'écoulement 2.

La seconde zone de membrane 8 s'étend sur toute la largeur larg de la membrane le long d'un bord aval 4d de la membrane. Cette seconde zone 8 s'étend en longueur sur toute la largeur larg de la membrane perpendiculairement au plan de section longitudinale P de la membrane 6. Cette seconde zone 8 est limitée en largeur par la projection, dans le plan P et selon la direction de projection perpendiculaire à ce plan P, de la ou des jonctions de la membrane avec le ou les moyens de transmission d'efforts 12. Dans le cas où ces moyens de transmission d'efforts 12 comportent une tige de liaison 13b dite tige aval (cette tige 13b sera décrite en détail ci-après), alors la largeur de cette seconde zone est la largeur la plus large de surface de tige 13b en contact avec la membrane 6.

Le bord amont 4c est un bord destiné à être placé dans l'écoulement de fluide en amont du bord aval 4d. Le bord aval 4d est le bord de membrane qui est le plus proche de la liaison membrane / moyens de transmission 12. Ce bord aval 4d par conséquent plus proche de la seconde zone 8 que de la première zone 6 et inversement pour le bord amont 4c. Le bord amont 4c est un bord de membrane opposé au bord aval 4d par rapport à la membrane.

Comme on le voit sur l'ensemble des figures 1 à 21, la membrane 4 est normalement formée par une seule pièce ayant un périmètre fermé dans lequel sont positionnées les première et seconde zones 6, 8. Toutefois, bien que cela ne soit pas représenté sur les figures, la membrane peut aussi être formée de plusieurs volets rigides articulés les un aux autres selon des axes d'articulations de volets perpendiculaires au plan P de section longitudinale de la membrane (ce plan de section longitudinale P est un plan passant par les première et seconde zones et coupant la membrane selon son épaisseur). Chaque articulation de deux volets peut éventuellement être une articulation élastique, ayant tendance à ramener les volets dans un même plan.

Le matériau constitutif de la membrane 4 est élastique et est préférentiellement choisi pour avoir une flottabilité comprise entre 0.8 et 1.2, cette flottabilité étant dans le cas présent de 1.1. A cet effet la membrane peut être en élastomère. Comme on le voit sur les figures 4 et 5 où la membrane est au repos, la membrane est soutenue verticalement par les moyens de limitation d'éloignement 9. Chaque endroit de la membrane au repos porté par ces moyens de limitation 9 forme un arrondi du fait de la résistance élastique de la membrane à sa flexion longitudinale. Comme détaillé ci-après au chapitre « LES CARACTERISTIQUES ELASTIQUES DE LA MEMBRANE », cette élasticité / raideur en flexion de la membrane est un paramètre influant du comportement ondulatoire de la membrane dans l'écoulement fluide. Par conséquent, on choisit l'élasticité en flexion de la membrane :

- en fonction du type d'écoulement de fluide dans lequel on souhaite la plonger (densité du fluide et vitesse d'écoulement) ; et
- en fonction de l'éloignement des première et seconde zones 6, 8 l'une par rapport à l'autre ; et
- en fonction de la masse de la membrane et la masse du convertisseur ou des convertisseurs notamment si ce convertisseur est porté par la membrane, les forces liées à la raideur devant compenser les forces d'inerties liées aux masses ; et
- en fonction de la quantité d'énergie que l'on souhaite récupérer dans cet écoulement de fluide.

Un moyen de limitation 9 type est un lien souple comportant au moins un câble souple. Comme on le voit sur les figures 1-11 chaque câble 9 comporte une extrémité propre reliée au système d'accroche 5 (au niveau d'un point du système d'accroche10, 11 qui est fixe par rapport au support 3) et une autre extrémité propre reliée à la membrane 4.

Le système d'accroche 5 comporte également des câbles 5a, 5b reliés au niveau de la première zone 6 de la membrane, en l'occurrence il s'agit du bord amont de la membrane via une tige de liaison amont 13a qui s'étend parallèlement au bord amont de la membrane et perpendiculairement à son plan P de section longitudinale.

**MOYENS DE TRANSMISSION D'EFFORTS**

Comme on le voit en particulier sur les figures 1, 2 et 5 à 12, le dispositif 1 comporte aussi des moyens de transmission d'efforts 12 attachés à la seconde zone 8 de membrane 4 pour transmettre de l'énergie mécanique de la seconde zone 8 vers un convertisseur d'énergie 14.

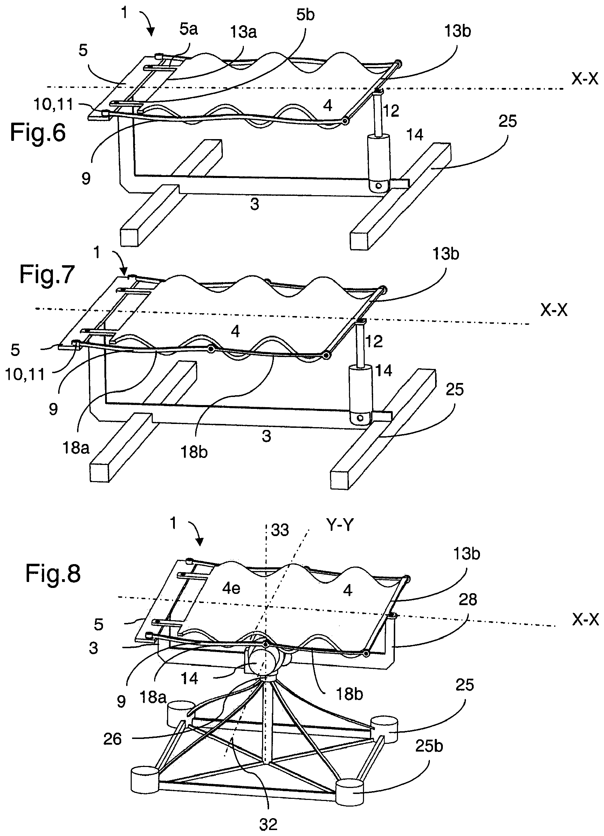

Comme on le voit sur chacune des figures 6-16, les moyens de transmission d'efforts 12 peuvent comporter une tige de liaison aval 13b reliée fixement à la membrane au niveau de la seconde zone de membrane 8, qui en l'occurrence s'étend le long du bord aval 4d de la membrane.

Dans le mode de réalisation des figures 2, 8, 9, on constate que les moyens de transmission d'efforts 12 peuvent comporter un bras de levier 28 relié au convertisseur d'énergie 14 lorsque ce convertisseur est de type rotatif (c'est-à-dire convertissant de l'énergie transmise via un couple rotatif et un mouvement angulaire selon un axe de rotation du convertisseur en une autre forme d'énergie telle qu'une énergie hydraulique ou électrique). Ce bras de levier 28 permet d'augmenter le couple au niveau du convertisseur 14 et peut également être utile pour adapter l'impédance mécanique du dispositif. Ce bras de levier 28 permet aussi de faciliter la solution pour l'étanchéité au point de liaison au convertisseur, par exemple par un soufflet métallique.

On peut pour exemple faire en sorte que ce bras de levier 28 ait une longueur variable ajustable.

On voit sur le mode de réalisation de la figure 2 que le bras 28 est relié à la membrane 4 via la tige de liaison aval 13b et via une bielle 29. La bielle 29 s'étend entre une extrémité du bras de levier 28 distante du convertisseur 14 et au moins un point d'attache formée sur la tige de liaison aval 13b. La liaison de la bielle 29 avec la tige de liaison aval 13b est une liaison pivot formée à une première extrémité de la bielle 29. Cette liaison pivot bielle / tige de liaison aval est d'axe parallèle à un axe principal de la tige de liaison 13b. La liaison de la bielle 29 avec le bras de levier 28 est une liaison pivot formée à une seconde extrémité de la bielle 29. Cette liaison pivot permet à la bielle 29 de pivoter par rapport au bras de levier 28 selon un autre axe parallèle à un axe de rotation du convertisseur rotatif 14.

**LE CONVERTISSEUR D'ENERGIE**

Comme on le voit sur les figures 1, 2, 5 à 12, le convertisseur d'énergie 14 est relié aux moyens de transmission d'efforts / de mouvement 12 et au support 3. Ce convertisseur d'énergie 14 génère une énergie électrique, à partir d'un mouvement relatif des moyens de transmission de mouvement 12 par rapport au support 3, et de la force d'entraînement de la membrane.

Préférentiellement ce convertisseur d'énergie 14 comporte :

- des moyens de génération d'un effort de résistance au déplacement des moyens de transmission d'efforts 12 par rapport au support 3 ; et

- des moyens de commande de variation de cet effort de résistance.

En l'occurrence les moyens de génération d'efforts peuvent consister en l'usage d'aimants associés à la bobine de convertisseur 14 pour générer une force électromagnétique s'opposant au déplacement du moyen de transmission 12.
Cette bobine peut être couplée avec un autotransformateur et le moyen de commande peut être un moyen de commande du taux de transformation de puissance électrique par l'auto transformateur. Cette fonction peut aussi être assurée par une électronique de puissance et de pilotage, adaptant et ajustant l'impédance électrique du circuit électrique aval consommant l'énergie captée.
Lorsque le dispositif 1 est plongé dans l'écoulement fluide 2, la membrane se met en mouvement et entraîne les moyens de transmission 12 en des mouvements alternatifs relativement au support 3. La présence du convertisseur 14 relié d'une part aux moyens de transmission 12 et d'autre part au support 3 permet de transformer de l'énergie mécanique issue du mouvement relatif associé à la force d'entraînement en une énergie réutilisable. Cette énergie réutilisable est :

- soit de l'énergie électrique, comme sur les figures 1, 2 et 5, et dans ce cas le convertisseur 14 est un alternateur ou une dynamo ; ou
- soit de l'énergie hydraulique et dans ce cas le convertisseur 14 comporte une pompe pour refouler un fluide dans des canalisations hydrauliques.

Le fait que ce convertisseur d'énergie 14 comporte :

- (a) des moyens de génération d'un effort de résistance au déplacement des moyens de transmission 12 par rapport au support 3 ; et
- (b) des moyens de commande de variation de cet effort de résistance ; permet de contrôler les efforts de résistance de la membrane à l'action du fluide (comme la membrane est liée aux moyens de transmission sur lesquels on applique l'effort de résistance, on peut en commandant la valeur de cet effort de résistance contrôler en partie au moins le mouvement de la membrane dans l'écoulement fluide).

En particulier, ces moyens de génération d'effort de résistance sont adaptés à faire varier une valeur de l'effort de résistance en fonction :

- d'au moins un paramètre représentatif d'une vitesse de déplacement de la membrane comme une vitesse de déplacement de seconde zone de la membrane par rapport au support de membrane ; et/ou
- d'au moins un paramètre mesuré de l'écoulement du fluide (la mesure est effectuée par exemple avec des moyens de mesure tels qu'un vélocimètre et/ou une sonde de pression dynamique), comme sa vitesse d'écoulement Vf et/ou sa pression dynamique.

Comme on le voit sur la figure 1, grâce à la commande de l'effort de résistance, on peut par exemple faire varier l'énergie captée en fonction de la vitesse de déplacement de la seconde zone de membrane selon un axe perpendiculaire Z-Z à l'axe d'écoulement du fluide X-X, cet axe perpendiculaire Z-Z s'étendant dans le plan P de section longitudinale de la membrane 4. Lorsque cette vitesse devient trop faible par rapport à un niveau bas de vitesse prédéterminé, alors on réduit la valeur de l'effort de résistance pour que la membrane recommence à onduler à un niveau de vitesse prédéterminé. Par contre, si la vitesse de déplacement de la seconde zone de la membrane selon l'axe Z-Z perpendiculaire à l'écoulement 2 du fluide devient trop importante par rapport à un niveau haut prédéterminé de vitesse de déplacement, alors on commande l'augmentation de la valeur de l'effort résistance et la vitesse de la membrane est alors réduite.
En procédant ainsi on peut faire en sorte que la commande soit régulée selon une règle de génération d'effort de résistance visant à ajuster la quantité d'énergie prélevée en fonction de la vitesse de déplacement d'au moins un point de la seconde zone de membrane 8. Ainsi on peut optimiser / maximiser le prélèvement d'énergie dans le fluide s'écoulant en ajustant la force de résistance à l'aide des moyens de commande.

## LES MASSES

On note aussi que le dispositif 1 peut avantageusement porter des masses assemblées avec la membrane 4 entre ses première et seconde zones 6, 8. Ces masses sont assemblées à la membrane via des moyens de fixation. Idéalement certains au moins de ces moyens de fixation de masses sont adaptés pour permettre sélectivement l'attachement et le détachement de la masse portée. Idéalement, on peut aussi faire en sorte que certains au moins de ces moyens de fixation de masse soient réglables et permettent un déplacement relatif de la masse qu'il porte vis-à-vis de la membrane.

De telles masses et réglages de positions de masse par rapport aux points de fixation de ces masses sur la membrane permettent de régler le comportement dynamique de la membrane, notamment la vitesse de propagation de l'onde, dans un écoulement fluide donné, ce qui impacte l'efficacité de prélèvement d'énergie dans l'écoulement.

Comme on le verra par la suite, la membrane peut également porter des convertisseurs 16a, 16b embarqués sur la membrane prélevant de l'énergie mécanique de déformation de la membrane et transformant cette énergie mécanique en énergie électrique. On note que de tels convertisseurs embarqués 16a, 16b ont chacun une masse propre et peuvent ainsi constituer des masses assemblées avec la membrane.

## LES MOYENS DE LIMITATION D'ELOIGNEMENT

Comme on le voit sur les figures 1 à 5, 7, 8, 10, 13 à 16, certains au moins des moyens de limitation d'éloignement 18a, 18b, sont respectivement reliés à plusieurs points intermédiaires 17a, 17b d'attache à la membrane éloignés entre eux et situés entre les première et seconde zones 6, 8 de la membrane. Ces moyens de limitation d'éloignement 18a, 18b qui sont reliés aux points intermédiaires 17a, 17b sont en outre :

- adaptés à limiter l'éloignement de chacun de ces points intermédiaires 17a, 17b par rapport à au moins un point du système d'accroche 5, à
- autoriser la mobilité de ces points intermédiaires 17a, 17b par rapport au support 3, et à
- limiter l'éloignement de certains au moins de ces points intermédiaires 17a, 17b les uns par rapport aux autres de façon que la membrane présente toujours une longueur L1, mesurée le long de ladite face 4e de la membrane et entre deux de ces points intermédiaires 17a, 17b, qui soit toujours supérieure à la distance D1 séparant ces deux points intermédiaires 17a, 17b.

En d'autres termes, ces moyens de limitation d'éloignement 18a, 18b sont adaptés à ce que chaque point intermédiaire d'attache 17a, 17b soit mobile par rapport au support 3. Ces moyens de limitation 18a et 18b sont également adaptés pour que l'éloignement des points intermédiaires 17a, 17b les uns par rapport aux autres soit limité de façon que la membrane présente toujours une longueur L1, mesurée entre deux de ces points intermédiaires le long de ladite face 4e de la membrane qui soit toujours supérieure à la distance D1 séparant ces deux points intermédiaires 17a, 17b.

Idéalement on fait en sorte que lorsque la membrane est au repos la distance D1 soit inférieure à 95% de L1 et préférentiellement que D1 soit inférieure à la moitié de L1.

Ainsi la membrane 4 et les points intermédiaires 17a, 17b sont disposés de manière que la membrane soit courbée entre ces points intermédiaires puisque sa longueur développée L1 entre ces points intermédiaires 17a, 17b est supérieure à la distance minimale D1 séparant ces points intermédiaires 17a, 17b.

Ces points d'attaches intermédiaires 17a, 17b reliés au système d'accroche 5 par les moyens de limitation 18a, 18b permettent d'augmenter le nombre de courbures de la membrane entre ses premières et seconde zones 6, 8 augmentant d'autant le nombre de zones d'alternances de pressions le long de la membrane. Ainsi, on augmente aussi la quantité d'énergie pouvant être prélevée par la membrane, dans certaines conditions.

En outre, on peut grâce à ces points d'attaches intermédiaires 17a, 17b avoir au moins autant de courbures qu'il y a de zones de membrane situées entre deux points d'attaches consécutifs amont et aval. On peut par exemple régler la forme de l'ondulation de la membrane dans l'écoulement fluide en ajoutant des points d'attache intermédiaires entre les première et seconde zones 6, 8. Typiquement en augmentant le nombre d'attaches 17a, 17b sur la longueur de la membrane, on s'assure que l'onde de membrane ait une période / longueur plus courte. Cette disposition des points intermédiaires d'attache permet aussi de faire varier l'amplitude de l'onde formée par la membrane, sa fréquence et sa vitesse de propagation Vm.

On note que chacun des moyens de limitation 18a, 18b reliés aux points intermédiaires peut être réalisé comme sur les figures 1, 3, 5 avec des fils ou des câbles s'étendant entre un point intermédiaire 17a et un point du système d'accroche qui est préférentiellement fixe par rapport au support 3.

Bien que cela ne soit pas représenté sur les figures, on peut aussi faire en sorte d'avoir des moyens pour régler, indépendamment les uns des autres, les différents éloignements des zones 6, 8 et des points intermédiaires 17a, 17b par rapport à leurs points d'accroche respectifs avec le système d'accroche 5. Ces réglages peuvent être choisis pour adapter la position des points intermédiaires de la membrane en fonction de caractéristiques de l'écoulement et/ou des efforts transmis par la membrane.

Comme on le voit sur le schéma de la figure 3 et sur le mode de réalisation de la figure 14, certains au moins des moyens de limitation d'éloignement 18a, 18b peuvent être élastiques, en l'occurrence il s'agit de ressorts de traction à spires hélicoïdales.

Pour une paire de moyens de limitation d'éloignement 18a, 18b donnée, on fait en sorte que chacun ait une raideur propre K1, K2.

Le premier des moyens de limitation 18a de cette paire est lié à la membrane en un premier emplacement situé entre ses première et seconde zones 6, 8. Ce premier emplacement peut être un des points intermédiaires d'attache de la membrane 17a, 17b.

Le second des moyens de limitation 18b de cette paire est lié à la membrane en un second emplacement situé entre le premier emplacement et la seconde zone 6 de la membrane.

La raideur propre K1 du premier des moyens de limitation 18a est choisie pour être supérieure à la raideur propre K2 du second des moyens de limitation 18b.

Cette caractéristique d'élasticité des moyens de liaison permet à chacun de ces moyens de limitation 18a, 18b de s'allonger lorsqu'une force de traction est exercée pour étirer la membrane entre les premier et second emplacements.

Avec ce mode de réalisation comportant des moyens de limitation d'éloignement élastiques l'amplitude de la courbure de la membrane et la quantité d'énergie prélevée dans l'écoulement fluide peuvent être réduites en fonction de l'allongement de ces moyens de limitation 18a, 18b. Les risques de dégradation de la membrane lorsque celle-ci est soumise à un écoulement trop puissant sont donc réduits.

Comme schématisé sur la figure 3, le fait d'avoir des raideurs K1, K2 des moyens de limitation 18a, 18b allant en se réduisant plus ils sont attachés près de la seconde zone 8 permet privilégier la réduction d'amplitude d'onde sur des zones proches de la seconde zone 8.

En cas de surcharge de la membrane du fait d'un écoulement 2 trop rapide, on privilégie d'abord la réduction d'amplitude d'onde de membrane sur les zones situées à proximité de la seconde zone de membrane. Puis, si cette limitation ne suffit pas, l'amplitude d'onde est alors aussi limitée sur une portion de membrane située à plus grande proximité de la première zone et ainsi de suite jusqu'à ce que la membrane soit complètement tendue et quasi plane.

Un effet de ces moyens de limitation élastiques 18a, 18b est de réguler, à partir d'une certaine vitesse du fluide Vf, la vitesse de l'onde Vm de déformation de la membrane en fonction de la vitesse Vf du fluide (ces vitesses Vm et Vf sont représentées sur les figures 1 et 2).

La mise en oeuvre des moyens de limitation élastiques est détaillée à la figure 14.

On voit sur cette figure que les moyens de limitation sont réalisés avec des ressorts hélicoïdaux montés en deux séries de ressorts de part et d'autre de bords longitudinaux de la membrane. Chacune des séries de ressorts s'étend entre les première et seconde zones de membrane parallèlement à un bord longitudinal correspondant de la membrane. Pour chacune des séries de ressorts on voit que les ressorts ont des raideurs propres disposées de manière décroissante en allant d'une raideur maximale K1 disposés à proximité de la première zone 6 vers une raideur minimale K3 disposée à proximité de la seconde zone 8. Les séries de ressorts placées de part et d'autre de la membrane sont identiques entre elles, y compris au niveau des raideurs de ressorts choisies, pour permettre aux bords longitudinaux de la membrane de se déformer sensiblement de la même manière et de façon synchrone favorisant la création d'ondulations perpendiculaires à l'axe de section longitudinale de la membrane. On cherche à ce qu'une onde donnée de la membrane présente une amplitude constante c'est-à-dire que chaque onde donnée présente sur la largeur de la membrane un écart d'amplitude par rapport à la valeur d'amplitude moyenne de l'onde sur la largeur de la membrane qui sont inférieur à 10% de cette valeur d'amplitude moyenne.

Les ressorts d'une même série de ressorts sont attachés entre eux en série et deux à deux. Chaque jonction de deux ressorts d'une série de ressorts forme un point de jonction de ressorts permettant une articulation de deux ressorts de la série entre eux. Ainsi sur une série donnée de N ressorts on a N-1 points de jonctions. La membrane comporte plusieurs points intermédiaires 17a, 17b de liaison avec les ressorts. Ces points intermédiaires 17a, 17b de la membrane sont répartis en deux séries de points intermédiaires. Chaque série de points intermédiaires s'étend le long d'un bord longitudinal de membrane propre. Ces séries de points intermédiaires sont symétriques entre elles par rapport à un plan P de section longitudinale central de la membrane. Ainsi la distribution des points intermédiaires 17a, 17b d'une série sur le bord longitudinal de membrane qui porte cette série est identique à la distribution des points intermédiaires de l'autre série de points intermédiaires sur l'autre bord de la membrane. Chaque série de points intermédiaires de la membrane est reliée à une série de ressorts correspondante. Pour cela, chaque point intermédiaire d'une série de points intermédiaire donnée est relié avec un seul point jonction de la série de ressorts correspondante. Chacune des liaisons entre un point de jonction d'une série de ressorts et un point intermédiaire 17a, 17b de la membrane correspondant est une liaison autorisant une liberté en rotation du point intermédiaire de membrane vis-à-vis du point de jonction selon un axe passant par ce point intermédiaire et perpendiculaire au plan P de la section longitudinale de la membrane. Ainsi la déformation de la membrane entre deux de ses points intermédiaires peut être différentes de la déformation d'un ressort entre ses points de jonctions. Dans ce mode de réalisation de l'invention comme dans tous les autres modes on fait en sorte que chaque liaison mécanique de la membrane avec un des moyens de limitation d'éloignement permette une rotation de la membrane par rapport au moyen de limitation selon un axe perpendiculaire au plan de section longitudinale de la membrane (c'est-à-dire selon un axe perpendiculaire à la direction de l'écoulement). Par ce type de liaison, on permet aux moyens de limitation de limiter l'écart entre les première et seconde zones de la membrane et l'écart entre des points intermédiaires de la membrane sans pour autant interdire la propagation des ondes le long de la membrane.

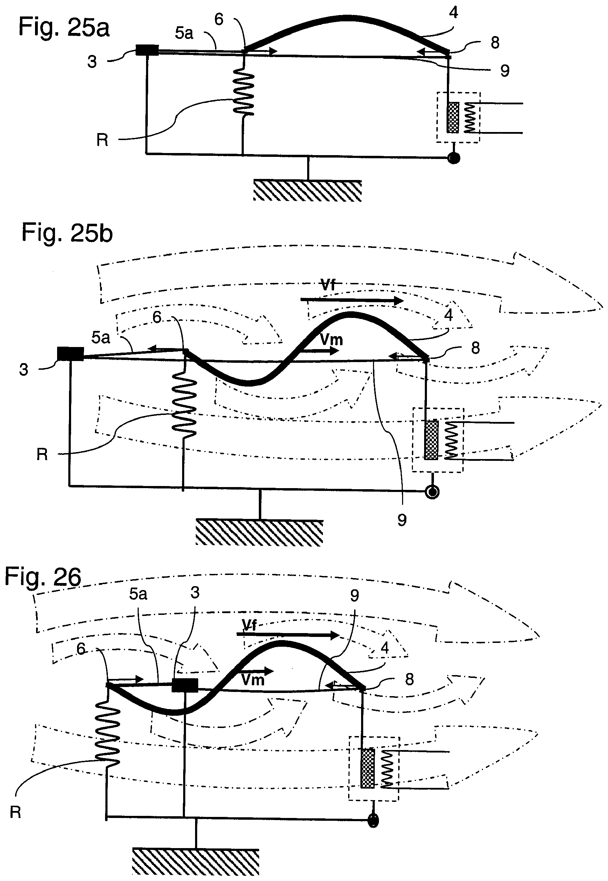

Dans certains modes de réalisation du dispositif de l'invention, comme ceux présentés aux figures 25a, 25b, 26, la membrane peut être reliée au support 3 :

- au niveau de sa première zone 6 (zone amont) via un lien rigide 5a dont une extrémité est montée pivotante par rapport au support 3 de manière à permettre une rotation de la première zone par rapport au support 3 ; et
- au niveau de sa seconde zone 8 via un lien 9 (pouvant être souple ou rigide) servant de moyen de limitation d'écartement des deux zones 6, 8 l'une par rapport à l'autre.

Dans ces modes, il n'y a pas de liaison intermédiaire, entre les première et seconde zones, pour relier la membrane au support. Le lien 9 est articulé par rapport au support 3 afin de permettre la rotation de la seconde zone 8 par rapport au support 3. Cette articulation est positionnée en amont de la membrane 4 de manière à ce que le lien 9 soit contraint en traction sous l'effet de l'écoulement de fluide de la première zone 6 vers la seconde zone 8.

Dans le mode des figures 25a, et 25b (comme pour les figures 1, 2, 5, 16), le lien 5a est disposé pour être soumis à un effort de traction sous l'effet de l'écoulement orienté de la première 6 vers la seconde 8 zone de membrane. Dans ce mode le bord amont 6 de la membrane soumise à l'écoulement à tendance à revenir dans une position centrale, réduisant la sensibilité à l'amorçage du mouvement.

A contrario, dans le mode de la figure 26, le lien 5a est disposé pour être soumis à un effort de compression sous l'effet de l'écoulement orienté de la première 6 vers la seconde 8 zone de membrane. Dans ce mode, le bord amont 6 de la membrane soumise à l'écoulement à tendance à s'écarter de la position centrale, augmentant ainsi la sensibilité à l'amorçage du mouvement.

## LES FORMES DE LA MEMBRANE

Comme on le voit sur la figure 15, le dispositif 1 de l'invention peut avantageusement comporter un déflecteur de tête 19 relié à la membrane 4 de façon rigide et situé entre le système d'accroche 5 et la première zone de la membrane 6 et/ou un déflecteur de queue 20 relié, de façon rigide, à un bout de la membrane et s'étendant au-delà de la seconde zone 8 de membrane.

Ces déflecteurs de tête 19 et de queue 20 sont chacun formés d'une lame rigide.

Le déflecteur de tête 19 qui est placé au début de la membrane (c'est-à-dire au niveau de sa première zone 6, le long du bord amont 4c) facilite l'amorçage de l'onde car lorsqu'il est soumis à un écoulement, il pivote selon un axe perpendiculaire au plan P de section longitudinale de la membrane et force la membrane à pivoter et onduler dans l'écoulement.

Le déflecteur de queue 20 est placé en queue de la membrane (c'est-à-dire au niveau de sa seconde zone 8, le long du bord aval 4d). Lorsqu'il est soumis à un écoulement ce déflecteur 20 a tendance à exercer sur la queue de la membrane un couple de rappel de ce bout de membrane vers une position dans laquelle il s'étendrait parallèlement à l'axe de l'écoulement X-X.

On réduit ainsi le couple sur la membrane à l'endroit de l'accroche des moyens de transmission 12 à la seconde zone de membrane 8.

Ces déflecteurs de tête 19 et de queue 20 peuvent être moulés avec la membrane 4 pour ainsi conférer une rigidité et une résistance accrue aux liaisons déflecteurs / membrane. On voit par exemple sur la figure 15 que les déflecteurs de tête 19 et de queue 20 respectifs sont moulés directement avec la membrane au niveau des première et seconde zones 6, 8 respectives.

Dans certains modes de réalisation, comme celui de la figure 18, des bossages longitudinaux 22 s'étendant sur l'une au moins des faces 4e de la membrane 4 dans des plans parallèles au plan P de section longitudinale de la membrane passant par les première et seconde zones 6, 8.

Ces bossages longitudinaux 22 sont orientés parallèlement à l'écoulement de fluide pour guider l'écoulement le long de la membrane réduisant ainsi la perte d'énergie par écoulement de fluide vers les bords longitudinaux de la membrane.

Ces bossages longitudinaux 22 permettent aussi d'accroître la raideur longitudinale de la membrane.

Dans certains modes de réalisation, comme celui de la figure 19, des bossages transversaux 21 s'étendant sur l'une au moins des faces 4e de la membrane perpendiculairement au plan P passant par un axe longitudinal A-A de la membrane.

Ces bossages transversaux 21 sont ainsi orientés perpendiculairement à l'écoulement de fluide X-X allant de la première zone 6 vers la seconde zone 8. Ces bossages 21 créent des résistances locales à l'écoulement le long de la membrane et permettent de capter une quantité d'énergie accrue dans l'écoulement fluide par rapport à une situation ou la membrane aurait des faces 4e parfaitement lisses.

Comme on le voit sur la figure 17, le dispositif 1 peut comporter un renfort longitudinal 23 s'étendant le long de la membrane 4 entre les première et seconde zones 6, 8 de la membrane. Ce renfort 23 est adapté à accroître la résistance de la membrane à la flexion autour d'un axe de flexion tel que l'axe D-D s'étendant perpendiculairement à un plan de section longitudinale P de la membrane passant par ses première et seconde zones 6, 8.

Grâce à ce renfort longitudinal 23 augmentant la raideur longitudinale de la membrane, on améliore le couplage mécanique de la membrane avec les moyens de transmission d'efforts 12 et par conséquent avec le convertisseur d'énergie 14. Pour un effort de flexion donné, la membrane a moins tendance à fléchir selon son axe longitudinal A-A. On peut ainsi transmettre via les moyens de transmission d'efforts 12 un effort supérieur à celui que l'on transmettrait si cette membrane ne comportait pas de renfort longitudinal élastique 23. Ce renfort longitudinal permet aussi d'éviter des déformations locales de la membrane sous l'effet des la pression dynamique du fluide. Si la largeur de la membrane le requiert, plusieurs renforts peuvent être disposés en parallèle. Ce renfort peut avoir une section et/ou une raideur évoluant du bord amont vers le bord aval de façon à ce que l'énergie de déformation s'accumule le long du trajet de l'onde et se propage de façon optimale jusqu'au convertisseur.

Comme on le voit aussi sur les figures 16 et 17, le dispositif 1 peut aussi comporter des renforts transversaux 24 s'étendant le long d'une face 4e de cette membrane et perpendiculairement à un plan P de section longitudinale de la membrane passant par les première et seconde zones 6, 8. Ces renforts transversaux 24 sont adaptés à accroître la résistance de la membrane à la flexion autour d'un axe de flexion longitudinal A-A passant par les première et seconde zones de la membrane 6,8.

Grâce à ces renforts transversaux 24 on augmente la raideur transversale de la membrane. Ainsi, on réduit le risque d'avoir des flexions involontaires de la membrane qui pourraient conduire à vriller la membrane le long de l'écoulement de fluide ce qui pourraient l'endommager et conduirait à une réduction de la quantité d'énergie prélevée dans l'écoulement.

Les renforts 23 et 24 peuvent être réalisés dans une matière composite à fort module d'élasticité du type fibre de carbone, ou fibre de verre.

## LES CARACTERISTIQUES ELASTIQUES DE LA MEMBRANE

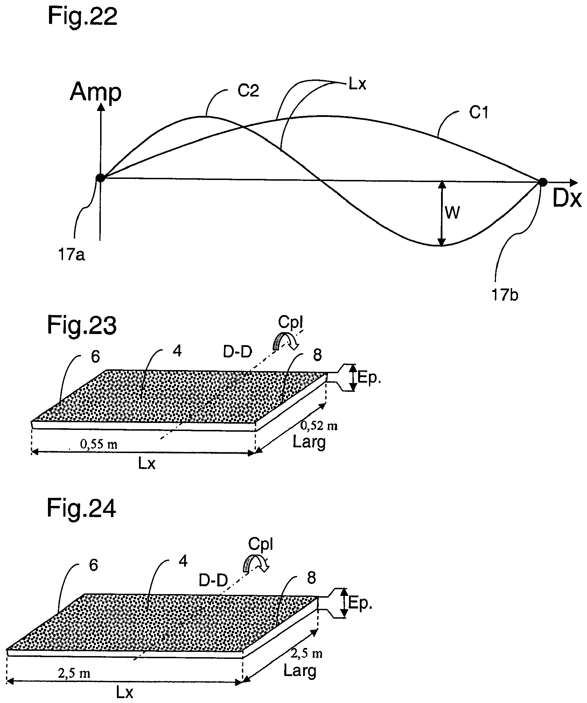

Comme indiqué précédemment, la membrane souple est choisie pour présenter une raideur élastique longitudinale en flexion lui conférant une résistance à la flexion dans son sens longitudinal, c'est-à-dire, une résistance à la flexion au moins entre ses première et seconde zones 6, 8 respectivement zones amont et zone aval. En d'autres termes, cette raideur élastique longitudinale K est telle que la membrane présente une résistance à la flexion autour d'axes de flexion D-D s'étendant perpendiculairement au plan de section longitudinale P de la membrane passant par ses première et seconde zones 6, 8 (voir les figures 23 et 24).

Cette raideur élastique longitudinale en flexion de la membrane est choisie en fonction de la masse de cette membrane et de telle manière que lorsque le dispositif est plongé dans un écoulement liquide ayant une vitesse d'écoulement comprise, en valeur absolue, entre 0.3m/s et 5 m/s, la membrane (lorsque vue en coupe longitudinale) présente au moins une ondulation complète entre ses bords amont et aval (lorsque le dispositif ne comporte par de points intermédiaires 17a ou 17b) ou entre ceux de ses points intermédiaires 17a, 17b de la membrane qui sont adjacents entre eux. Préférentiellement, on choisit les caractéristiques de la membrane telles que sa raideur en flexion longitudinale pour qu'elle présente non pas au moins une ondulation mais une moitié d'ondulation.

Idéalement, pour favoriser le rendement de récupération d'énergie du dispositif 1, on choisit des caractéristiques de la membrane, sa raideur, sa masse, et des moyens de limitation d'éloignement 9 telles que la vitesse de la propagation de l'onde Vm le long de la membrane soit comprise entre 1/5 et 2/3 de la vitesse d'écoulement du fluide Vf et préférentiellement égale à 1/3 de cette vitesse d'écoulement de fluide Vf.

Ces modes ondulatoires à une demi-ondulation ou une ondulation complète sont illustrés à la figure 24 où l'on voit les courbes C1 et C2 qui illustrent la variation d'amplitude Amp de membrane entre deux de ses points dont l'écartement est limité. L'amplitude maximale est notée W.

Chaque courbe C1, C2 est réalisée en prenant une membrane, en la reliant au support entre ses des premier et deuxième zones 6, 8 de façon à limiter l'éloignement Dx des points de membrane l'un par rapport à l'autre. Comme cette distance d'éloignement Dx est inférieure à la longueur de membrane Lx et comme cette membrane possède une raideur en flexion, celle-ci forme au moins une demi-onde de flexion. Chaque fixation en 17a, 17b est telle que la membrane reste libre de pivoter selon un axe de pivotement transversal de la membrane (c'est-à-dire selon un mouvement de pivotement perpendiculaire au plan de section longitudinal P de la membrane). Après fixation, la membrane est soumise à un écoulement de fluide ayant une vitesse donnée et on constate que la membrane se met à onduler selon un mode vibratoire qui lui est propre et qui détermine sa capacité de prélèvement d'énergie dans l'écoulement.

La courbe C1 représente un mode d'ondulation d'une portion longitudinale d'une première membrane ayant une première raideur en flexion longitudinale donnée, ici l'ondulation entre les points 17a, 17b est d'une demie onde.

La courbe C2 représente un mode d'ondulation d'une portion longitudinale d'une autre membrane ayant une autre raideur en flexion longitudinale donnée, ici l'ondulation entre les points 17a, 17b est d'une onde complète (ondulation de forme quasi sinusoïdale présentant une période complète entre les points 17a et 17b). Idéalement, on détermine la raideur de la membrane, son épaisseur, sa largeur, sa longueur entre les points 17a, 17b, l'éloignement et le nombre de ces points de liaison 17a, 17b de manière à maximiser sa capacité de récupération d'énergie dans un écoulement donné.

Dans ce but on favorisera les modes ondulatoires d'une onde complète ou d'une demi-onde complète entre deux points de fixation adjacents..

**Calcul de caractéristiques de membrane pour un écoulement donné.**

1) En fonction de l'environnement où l'on souhaite implanter le dispositif et des moyens de liaison de la membrane au support qui ont été choisis, on détermine :

- L qui est la longueur de membrane libre d'onduler entre deux points d'attache (dans le cas d'une membrane uniquement reliée au support via ses première et deuxième zones 6, 8, L est la longueur totale de membrane. Dans ce cas, il n'y a pas de points de liaison intermédiaires) ; et
- Larg qui est la largeur de la membrane.

2) Connaissant la vitesse de l'écoulement Vf dans lequel on souhaite capter de l'énergie, on détermine la vitesse Vm de propagation de l'onde sur la membrane que l'on souhaite. Idéalement Vm= Z * Vf avec Z qui est un coefficient différentiel entre les vitesses Vm et Vf. Z est choisi entre 1/5 et 2/3 et est préférentiellement égal à 1/3.

3) On calcule la période T d'ondulation souhaitée de la membrane avec

$$T = L/Vm.$$

4) On détermine la fréquence propre $\omega$ souhaitée de la membrane selon la formule :

$$\omega = 2\prod/T$$

5) Connaissant la fréquence propre idéale souhaitée $\omega$, et sachant que la fréquence propre d'une membrane $\omega_n$ est définie par la formule :

$$\omega_n{}^2 = \alpha^4 * (E*I_x)/(q*L^4),$$

on détermine le facteur « $E*I_x$ » qui permet de faire tendre $\omega_n$ vers la fréquence propre idéale $\omega$, ceci avec une raideur de membrane compensant les forces d'inerties liées à sa masse.
On note que:

- $\alpha$ est un coefficient choisi en fonction du mode ondulatoire préférentiel choisi pour la membrane et en fonction des moyens d'assemblage choisis pour la membrane ;
- E est le module d'élasticité de la membrane ;
- Ix est le moment d'inertie de la membrane ;
- q est la densité linéique de la membrane.
- L est la longueur de la membrane.

A titre d'exemple, si on privilégie un mode ondulatoire dit mode 2 (la courbure d'ondulation de la membrane est de la forme de l'onde C2 de la figure 22), alors on pourra avoir :

* $\alpha$ =3.142 si la membrane est libre en rotation en amont (au niveau de sa première zone) et si elle est reliée en aval au convertisseur 14 ; ou
* $\alpha$=2.345 si la membrane est libre en rotation (au niveau de sa première zone) et si elle a une masse importante (par exemple si le convertisseur est embarqué sur la membrane).

Pour des exemples de choix de $\alpha$ on pourra se référer à l'ouvrage "Théorie des vibrations- Application à la dynamique des structures" de M. Géradin et D. Rixen (2ième édition corrigée et complétée) publié chez MASSON.

La valeur de q est donnée par la formule :

$$q = \rho*L*e$$

où

*$\rho$ est la densité surfacique de la membrane (la densité surfacique est augmentée si le convertisseur est embarqué sur la membrane, il faut aussi ajouter la masse des renforts, des pièces d'accrochage ainsi qu'une valeur de masse de fluide couplé) ;
* e est l'épaisseur de la membrane ;
* L est la longueur de la membrane.

Si la membrane est du type prismatique, comme le sont les membranes des figures 23 et 24, la valeur de Ix de la membrane est donnée par la formule :

$$Ix = Larg*e^3/12$$

où

* Larg est la largeur de la membrane ; et
* e est son épaisseur aussi noté Ep.

6) Ayant déterminé la longueur L, la largeur Larg, l'épaisseur e de la membrane et le facteur (E*Ix), on peut maintenant définir le la raideur minimale en flexion longitudinale K que doit présenter la membrane pour pouvoir onduler à la vitesse souhaitée et selon le mode vibratoire souhaité, dans l'écoulement choisi. Pour cela, on utilise la formule :

$$K \geq (\alpha^4*E*Ix)/(L^3)$$

Cette raideur K et la puissance du convertisseur 14 doivent être dimensionnées pour que la membrane conserve une forme d'ondulation permettant la propagation de l'onde à la vitesse Vm requise. Les figures 23 et 24 illustrent des membranes idéales pour la réalisation de dispositifs selon l'invention. Chacune de ces membranes forme une plaque d'élastomère souple rectangulaire qui lorsque posée sur un support plan reprend naturellement sa forme plane.
On choisi l'épaisseur minimale locale de membrane de manière à ce que la raideur K minimale et le moment d'inertie minimum interdisent des déformations locales de membrane nuisibles aux performances de la machine.

| Paramètres de la membrane de la figure 23 : Mode ondulatoire C1 de la figure 22 | Valeurs |
|---|---|
| Longueur L | 0.55m |
| Largeur Larg | 0.52m |
| Epaisseur (Ep.) | 0.005m |
| Module d'Young moyen E (*) | 53MPa |
| Densité linéique | 5.5Kg/m |

| Paramètres de la membrane de la figure 24 : Mode ondulatoire C2 de la figure 22 | Valeurs |
|---|---|
| Longueur L | 2.5m |

(suite)

| Paramètres de la membrane de la figure 24 : Mode ondulatoire C2 de la figure 22 | Valeurs |
|---|---|
| Largeur Larg | 2.5m |
| Epaisseur (Ep.) | 0.01m |
| Module d'Young moyen E (*) | 650MPa |
| Densité linéique | 40.8Kg/m |
| (*) On note que le Module d'Young est ici une moyenne de plusieurs mesures. Le module d'Young est mesuré pour une flexion longitudinale de la membrane, c'est-à-dire lorsque la membrane est soumise à un effort créant un couple Cpl autour d'un axe transversal D-D de la membrane s'étendant selon sa largeur (ce type d'effort est similaire à celui provoquant l'ondulation de la membrane). | |

Pour la mise en oeuvre de l'invention, dès lors que l'éloignement entre des points 17a, 17b adjacents est supérieur à un mètre, on préfèrera avoir une membrane présentant un module d'Young en flexion longitudinale E supérieur à 5MPa.

Idéalement la membrane est choisie pour présenter :

- une raideur élastique en traction longitudinale importante pour limiter son allongement en traction longitudinale ; et
- une raideur élastique en traction transversale importante pour limiter son allongement en traction transversale.

A cette fin les raideurs sont choisies pour que l'allongement transversal soit inférieur à 1/50 de la largeur Larg et à 1/50 de la longueur L. Un moyen de limiter ces raideurs en traction sans trop affecter la raideur en flexion est d'armer la membrane avec des fibres souples et de très forte raideur.

On note que la raideur en flexion longitudinale des membranes peut être sensiblement constante sur sa longueur, mais il est aussi possible que cette raideur élastique en flexion longitudinale soit variable le long de la membrane. Ainsi la raideur en flexion de la membrane peut aller en augmentant en allant de la première zone 6 (zone amont) vers la seconde zone 8 (zone aval) de la membrane. Cette augmentation de la raideur en flexion longitudinale peut se faire par palier(s) ou de manière régulière. Par exemple, on aura une augmentation en paliers si la portion longitudinale aval est un sandwich de plusieurs couches d'élastomère et si une portion longitudinale amont de la membrane est constituée d'un nombre inférieur de couche(s) d'élastomère.

Au contraire, on aura une augmentation régulière de la raideur si la membrane a une épaisseur qui augmente régulièrement de sa zone amont vers sa zone aval.

## LES MOYENS DE POSITIONNEMENT

Comme on le voit sur les figures 8 à 12, le dispositif comporte des moyens de positionnement 25 du dispositif dans son environnement. Ces moyens de positionnement 25 sont :

- soit flottants 25a, comme sur la figure 11, et adaptés à positionner le dispositif dans l'écoulement par flottaison dans cet écoulement ;
- soit lestés 25b, comme sur les figures 8, 9, 12, et adaptés à positionner le dispositif sur un sol limitant l'écoulement.

Ces moyens de positionnement 25 sont reliés au support 3 par au moins une articulation 26 d'orientation du support 3 par rapport à ces moyens de positionnement 25.

L'articulation 26 désigne tout moyens de liaison adapté à relier le support 3 à certains au moins des moyens de positionnement 25 et autorisant au moins un degrés de mobilité du support 3 par rapport à certains au moins de ces moyens de positionnement 25.

En particulier, comme on le voit sur les figures 8 et 9, l'articulation 26 comporte des premier et second axes d'orientations 32, 33. Le premier axe d'orientation 32 est adapté à permettre un pivotement des moyens de positionnement 25 par rapport au support 3 selon ce premier axe d'orientation 32. Le second axe d'orientation 33 est adapté à permettre un pivotement des moyens de positionnement 25 par rapport au support 3 selon ce second axe d'orientation 33.

Ces premier et second axes d'orientation 32, 33 sont disposés dans des plans perpendiculaires l'un par rapport à l'autre de manière que le premier axe d'orientation 32 puisse être placé dans un plan horizontal alors que le second axe d'orientation 33 est placé dans un plan vertical.

Ce mode de réalisation est avantageux car il permet de positionner le dispositif dans son environnement via ses moyens de positionnement 25 et l'articulation 26. D'autre part ce mode de réalisation permet l'orientation du support 3 et donc de la membrane 4 dans ce même environnement en fonction notamment de l'écoulement de fluide autour du dispositif 1. L'orientation de la membrane 4 dans l'écoulement permet d'avoir un sens d'écoulement allant de la première zone 6 qui est placée en amont vers la deuxième zone 8 pour ainsi maximiser le prélèvement d'énergie dans l'écoulement 2.

On note que dans un mode de réalisation, le dispositif selon l'invention peut ne comporter qu'un seul axe d'orientation qui peut permettre une orientation selon un axe vertical (comme sur la figure 10) ou horizontal (comme sur les figures 1 et 2).

Avec l'orientation selon l'axe vertical 33, lorsque le dispositif est placé en mer, on a un gain de performance sur le cycle journalier du courant de marée, car celui-ci change d'orientation.

L'orientation selon un axe horizontal 32 est utile pour permettre une orientation du système en fonction des mouvements de houle qui sont des mouvements à basse fréquence par rapport à la fréquence d'ondulation de la membrane 4. On note que cet axe horizontal 32 peut être placé entre les moyens de positionnement 25 et le support 3 qui porte le convertisseur 14 et sous ce convertisseur 14, comme c'est le cas sur la figure 2.

Les modes des figures 1 à 9 et 11 et 12 présentent la membrane parallèle au sol et sensiblement horizontale. Ces modes sont préférés lorsque le dispositif est dans une zone de faible profondeur à grande vitesse de fluide et à fort potentiel d'exploitation d'énergie hydro cinétique.

Le mode de la figure 10 avec la membrane verticale peut être utilisé dans des hauts fonds compatibles avec de dispositifs de grande hauteur, il est aussi moins sensible aux mouvements de houle.

Le mode de la figure 11 où le moyen de positionnement 25 est flottant 25a, est utilisé pour maintenir la membrane proche de la surface, où les vitesses d'écoulement sont les plus fortes. Ce mode peut être utile pour disposer le convertisseur hors de l'eau, ce qui en améliore la longévité.

Comme on le voit sur les figures 1 et 2, le dispositif peut également comporter un moyen de rappel élastique 34 du support 3 dans une position moyenne vis-à-vis du moyen de positionnement 25. Ce moyen de rappel 34 est lié d'une part au support 3 et d'autre part au moyen de positionnement 25 et force le support se déplacer via l'articulation vers une position moyenne qu'adopte le support en l'absence d'écoulement.

## LES DEFLECTEURS DE SUPPORT

Comme on le voit sur la figure 9, le dispositif peut comporter des déflecteurs de support longitudinaux 27a ; et/ou des premier et second déflecteurs de support transversaux 27b.

Les déflecteurs de support longitudinaux 27a sont fixés au support 3 et s'étendent respectivement dans des plans parallèles entre eux et parallèles à un axe A-A passant par les première et seconde zones 6, 8. La membrane 4 est disposée entre ces plans qui contiennent respectivement les déflecteurs de support longitudinaux 27a

Les premier et second déflecteurs de support transversaux 27b, sont fixés au support 3 et s'étendent dans un même plan. Le premier déflecteur de support transversal 27b est parallèle à un bord avant de la membrane 4c en vis-à-vis de la première zone de membrane 6 et le second déflecteur de support transversal 27b est parallèle à un bord arrière 4d de la membrane en vis-à-vis de la seconde zone de membrane 8.

Les déflecteurs de support longitudinaux 27a et transversaux 27b sont utiles en particulier lorsqu'ils sont utilisés en combinaison avec au moins une articulation 26 pour orienter le support 3 par rapport aux moyens de positionnement 25. Dans ce mode, ces déflecteurs de support transversaux et longitudinaux servent de dérives au dispositif pour l'orienter dans son environnement. En effet, les déflecteurs longitudinaux permettent une orientation du support selon un axe vertical alors que les déflecteurs transversaux permettent une orientation du support par rapport à un axe horizontal. Dans ce mode ces déflecteurs permettent d'améliorer l'adaptation du dispositif à son environnement pour une meilleure captation d'énergie dans l'écoulement.

Les déflecteurs longitudinaux permettent un gain d'efficacité des bords de la membrane au voisinage de ces déflecteurs.

Les déflecteurs transversaux 27b permettent aussi un accroissement des différentiels de pressions sur les faces de membrane avoisinantes, et un gain d'efficacité des bords amont 4c et aval 4d de la membrane 4 dans la captation d'énergie hydro cinétique.

Chaque déflecteur de support longitudinal 27a est positionné le long d'un bord longitudinal de membrane et est sensiblement perpendiculaire aux faces 4e de la membrane (y compris lorsque la membrane est en mouvement d'ondulation). Chaque déflecteur longitudinal 27a permet de limiter le risque d'avoir des veines fluide s'écartant latéralement d'un bord correspondant de membrane.

## LES CONVERTISSEURS EMBARQUES

Comme on le voit sur les figures 20 et 21, le dispositif peut comporter des convertisseurs embarqués 16a, 16b

sur la membrane 4. Ces convertisseurs 16a, 16b sont placés à l'écart dudit support 3. Ces convertisseurs 16a, 16b transforment de l'énergie mécanique de déformation de la membrane en énergie électrique.

Deux types 16a, 16b de convertisseurs embarqués sur la membrane sont envisagés.

Un premier type 16a, visible à la figure 20, comporte un groupe d'aimants permanents 16a2 et un groupe de bobines 16a1. Certaines au moins des bobines du groupe de bobines 16a1 sont reliées mécaniquement à la membrane et certains au moins des aimants du groupe d'aimants 16a2 sont reliés mécaniquement à la membrane 4.

Ces liaisons mécaniques d'aimants et de bobines avec la membrane 4 sont adaptées pour que lors d'une déformation de la membrane, par rapprochement ou éloignement des première et seconde zones de membrane 6, 8 l'une par rapport à l'autre, des bobines du groupe de bobines 16a1 se translatent vis-à-vis d'aimants du groupe d'aimants 16a2 de manière à induire un courant électrique dans certaines au moins de ces bobines.

On note que certains au moins des aimants et/ou bobines peuvent constituer des masses mobiles fixées sur la membrane 4.

Un second type 16b de convertisseurs embarqués est visible sur le mode de la figure 21. On voit sur cette figure un groupe de générateurs rotatifs 16b de courant électrique embarqués sur la membrane 4. Chaque générateur rotatif comportant deux bras 16b1 montés en rotation l'un par rapport à l'autre selon un axe propre 16b2 du générateur rotatif. Chaque générateur rotatif est adapté à générer du courant électrique lorsque ses bras 16b1 sont pivotés l'un par rapport à l'autre selon l'axe 16b2.

Préférentiellement chaque générateur rotatif du groupe est disposé de manière que ses bras 16b1 soient attachés à la membrane 4 et que son axe propre de générateur 16b2 soit perpendiculaire au plan P de section longitudinale de la membrane. En d'autres termes, les axes propres 16b2 des générateurs rotatifs embarqués sur la membrane sont parallèles aux bords amont 4c et aval 4d de la membrane 4.

Dans le mode de la figure 21, les bras de certains au moins des générateurs rotatifs sont reliés entre eux de manière à former une chaîne articulée de générateurs embarqués rotatifs portés par la membrane. Cette chaîne articulée de générateurs embarqués se déforme en suivant des ondulations de la membrane. Cette chaîne de générateurs rotatifs embarqués génère de l'énergie électrique dès que la membrane ondule sous l'effet de l'écoulement de fluide.

On notera que l'invention peut également concerner un dispositif de récupération d'énergie comportant une membrane liée au niveau d'une première zone à un support via des moyens d'accroche et liée à une seconde zone à un moyen de transmission qui est embarqué sur la membrane et dans ce cas ce moyen de transmission relie la seconde zone à au moins un convertisseur embarqué d'un des types prédéfinis, ce dispositif comportant également des moyens de limitation d'éloignement tels que ceux prédéfinis.

Bien que cela ne soit pas représenté sur les figures, les moyens de limitations de distance peuvent aussi être intégrés aux générateurs embarqués, linéaires ou rotatifs.

Dans ce mode la transmission d'efforts captés au niveau de la seconde zone se fait via un moyen embarqué sur la membrane, le convertisseur étant également embarqué sur la membrane comme c'est le cas dans les modes des figures 20 et 21.

## DISPOSITIF A DEUX MEMBRANES SYMETRIQUES PAR RAPPORT A UN AXE D'OSCILLATION

Comme on le voit sur le mode de réalisation de la figure 12, le système d'accroche 5 peut être doté d'un premier ensemble 30 et d'un second ensemble 31. Ces ensembles 30 et 31 sont reliés rigidement l'un à l'autre et montés à rotation par rapport à un axe de support B-B qui s'étend entre ces ensembles 30 et 31.

Une première membrane souple 4a, est accrochée au premier ensemble 30 au niveau d'une première zone de la membrane, conformément à l'un au moins des modes d'accroches de membrane déjà présentés.

Une seconde membrane souple 4b, est accrochée au second ensemble 31 au niveau d'une première zone de cette seconde membrane 4b, conformément à l'un au moins des modes d'accroches de membrane déjà présentés.

Le dispositif de cette figure 12 comporte un moyen de transmission comportant une tige aval 13b qui s'étend perpendiculairement à l'axe B-B. Cette tige 13b est montée à rotation autour de cet axe B-B. La membrane 4a comporte une seconde zone attachée à la portion de la tige 13b qui s'étend d'un côté de l'axe B-B. La membrane 4b comporte aussi une seconde zone attachée à la portion de la tige 13b qui s'étend de l'autre côté de l'axe B-B. Ces portions de la tige aval 13b peuvent respectivement être montées pivotantes par rapport à l'axe B-B selon un axe de pivotement C-C s'étendant le long de la tige 13b. Cet axe C-C est perpendiculaire à l'axe B-B. Ainsi chaque portion de la tige aval peut pivoter selon l'axe C-C de manière indépendante du pivotement de l'autre portion de la tige 13b selon l'axe C-C.

Ce dispositif de la figure 12 comporte aussi des moyens de limitation d'éloignement des première et seconde zones des deux membranes 4a, 4b. Par exemple, ces moyens de limitation d'écartement peuvent consister en une butée fixant la distance D de la tige aval 13b des moyens de transmission par rapport à la tige amont 13a du système d'accroche de manière à ce qu'elle soit inférieure à la longueur L de chacune des membranes (ces membranes 4a et 4b étant identiques entre elles, c'est-à-dire qu'elles ont les mêmes dimensions de longueur de largeur et d'épaisseur et sont formées d'un même matériau).

Ce dispositif possède également un convertisseur relié aux tiges amont et aval 13a, 13b de manière que lorsque ces tiges se déplacent en rotation l'une par rapport à l'autre par rotation autour de l'axe B-B, ce générateur produise alors de l'électricité.

Le fait que ces membranes 4a, 4b soient reliées entre elles en amont via la tige 13a du système d'accroche et en aval via la tige 13b des moyens de transmission 12 permet de forcer chaque membrane à avoir une ondulation propre déphasée par rapport à l'ondulation propre de l'autre membrane. Comme chacune de ces membranes ondule avec l'écoulement de fluide (puisque sa longueur L est supérieure à la distance minimale D) en ayant une onde déphasée par rapport à l'onde de l'autre membrane, on constate que la tige aval 13b oscille en rotation selon l'axe B-B par rapport à la tige amont 13a. Dès lors que ces tiges oscillent l'une par rapport à l'autre le convertisseur 14 produit alors de l'énergie électrique.

L'invention n'est pas limitée aux seuls modes de réalisation décrits précédemment et peut aussi comporter des modes dans lesquels les moyens de limitations pourraient comporter des biellettes montées en série et articulées entre elles à la place de câbles. Toutefois on constate que la performance de captation d'énergie du dispositif est améliorée si l'on utilise des câbles comme moyen de limitation d'éloignement.

On note aussi que les moyens de récupération d'énergie qui sont agencés pour récupérer de l'énergie de mouvements d'ondulation de la membrane peuvent comporter :

- un / des convertisseur(s) d'énergie 14 tels que ceux présentés précédemment ; et/ou
- un / des convertisseur(s) embarqué(s) tel que ceux 16a, 16b présentés précédemment ; et/ou
- un / des convertisseurs embarqués sur la membrane formée par une structure en polymère électro actif, ce polymère étant agencé pour produire de l'électricité lorsqu'il subit une déformation mécanique du fait de la déformation de membrane (Idéalement toute la membrane est en polymère électro actif).

Afin d'augmenter les caractéristiques de raideur en flexion longitudinale de la membrane et aussi afin d'éviter qu'elle ne se vrille de trop entre ses zones amont et aval, on peut aussi prévoir d'équiper la membrane de raidisseurs disposés selon des en diagonales de la membrane.

Comme on le voit sur les figures 1, 25a, 25b 26) des raidisseurs élastiques R peuvent être implantés pour s'opposer élastiquement au déplacement de la première zone 6 de la membrane 4 de part et d'autre d'une position (par exemple une position centrale de cette première zone qui est adoptée lorsque la membrane est au repos). Ces raidisseurs élastiques R sont reliés à la première zone de membrane 6 et au support 3 de manière à forcer le retour de la première zone 6 dans sa position centrale. Un tel raidisseur R s'oppose au déplacement du bord amont de la membrane selon un axe de déplacement perpendiculaire au plan dans lesquels s'étendent les bords amont et aval de cette membrane au repos.

Enfin on note que cette raideur R peut être réalisée en utilisant un lien 5a du support 3 à la première zone 6 qui est élastique en flexion transversale par rapport à l'écoulement.

## Revendications

1. Dispositif (1) de récupération d'énergie dans un écoulement de fluide (2) comportant :

   - un support (3) ;
   - une membrane souple (4) ;
   - un système d'accroche (5) d'au moins une première zone (6) de la membrane (4) reliant cette première zone (6) de la membrane (4) au support (3) ;
   - un convertisseur d'énergie (14) ;
   - des moyens de transmission d'efforts (12) reliés à une seconde zone (8) de la membrane (4) éloignée de la première zone de membrane (6), cette seconde zone de la membrane (8) étant mobile par rapport au support (3) et ces moyens de transmission d'efforts (12) étant agencés pour transmettre de l'énergie mécanique de la seconde zone (8) vers le convertisseur d'énergie (14), **caractérisé en ce que** :
   - le dispositif (1) comporte des moyens de limitation d'éloignement (9) adaptés à limiter l'éloignement de la première zone de membrane (6) par rapport à au moins un premier point (10) du système d'accroche (5) et à limiter l'éloignement de la seconde zone de membrane (8) par rapport à un second point (11) du système d'accroche (5), ces moyens de limitation de l'éloignement (9) étant tels que les première et seconde zones (6, 8) soient espacées l'une de l'autre d'une distance minimale (Dmin) inférieure à la longueur la plus courte (Lmin) séparant ces première et seconde zones (6, 8) mesurée le long d'une face (4e) de la membrane, ces moyens de limitation de l'éloignement favorisant ainsi un mouvement d'ondulation de la membrane lorsque celle-ci est placée dans ledit écoulement de fluide (2),

la membrane souple présentant une raideur élastique longitudinale s'opposant à sa flexion entre ses première et seconde zones (6, 8).

2. Dispositif selon la revendication 1, dans lequel ladite raideur élastique longitudinale est telle que la membrane présente une résistance à la flexion autour d'axes de flexion (D-D) s'étendant perpendiculairement à un plan de section longitudinale (P) de la membrane passant par les première et seconde zones (6, 8) de la membrane (4).

3. Dispositif selon l'une quelconque des revendications 1 ou 2, dans lequel, les moyens de limitation de l'éloignement (9) sont tels que les première et seconde zones (6, 8) sont espacées l'une de l'autre d'une distance minimale (Dmin) inférieure à 95% de la longueur la plus courte (Lmin) séparant ces première et seconde zones (6, 8) mesurée le long de ladite face (4e) de la membrane (4).

4. Dispositif selon l'une quelconque des revendications 1 à 3, dans lequel le convertisseur d'énergie (14) relié aux moyens de transmission d'efforts (12) est aussi relié au support (3) et est adapté à générer une énergie, telle que de l'énergie électrique, à partir d'un mouvement relatif des moyens de transmission d'efforts (12) par rapport au support (3).

5. Dispositif selon la revendication 4, dans lequel le convertisseur d'énergie (14) comporte :

   - des moyens de génération d'un effort de résistance au déplacement des moyens de transmission (12) par rapport au support (3) ; et
   - des moyens de commande de variation de cet effort de résistance.

6. Dispositif selon l'une au moins des revendications précédentes, **caractérisé en ce que** certains au moins des moyens de limitation d'éloignement (9, 18a, 18b), sont reliés à plusieurs points intermédiaires (17a, 17b) d'attache à la membrane situés entre les première et seconde zones (6, 8) de la membrane, ces moyens de limitation d'éloignement (9, 18a, 18b) qui sont reliés aux points intermédiaires étant en outre :

   - adaptés à limiter l'éloignement de chacun de ces points intermédiaires (17a, 17b) par rapport à au moins un point du système d'accroche (5), à
   - autoriser la mobilité de ces points intermédiaires par rapport au support (3), et à
   - limiter l'éloignement de certains au moins de ces points intermédiaires (17a, 17b) les uns par rapport aux autres de façon que la membrane présente toujours une longueur (L1), mesurée le long de ladite face (4e) de la membrane et entre deux de ces points intermédiaires, qui soit toujours supérieure à la distance (D1) séparant ces deux points intermédiaires (17a, 17b).

7. Dispositif selon la revendication 6, dans lequel la membrane est choisie de telle manière que lorsque le dispositif est plongé dans un écoulement d'eau ayant une vitesse d'écoulement comprise entre 0.3 et 5 mètres par seconde, la membrane vue en coupe longitudinale présente une ondulation complète et préférentiellement une demie ondulation entre des points intermédiaires (17a, 17b) de la membrane qui sont adjacents entre eux.

8. Dispositif selon l'une au moins des revendications précédentes, dans lequel :

   - certains au moins des moyens de limitation d'éloignement (18a, 18b) sont élastiques et forment au moins une paire de moyens de limitation d'éloignement (18a, 18b) ayant chacun une raideur propre (K1, K2),
   - un premier des moyens de limitation (18a) de cette paire étant lié à la membrane en un premier emplacement situé entre ses première et seconde zones (6, 8);
   - un second des moyens de limitation (18b) de cette paire étant lié à la membrane en un second emplacement situé entre le premier emplacement et la seconde zone (6) de la membrane ;et
   - la raideur propre (K1) du premier des moyens de limitation (18a) de cette paire étant supérieure à la raideur propre (K2) du second des moyens de limitation (18b) de cette paire.

9. Dispositif selon l'une au moins des revendications précédentes, comportant en outre :

   - un déflecteur de tête (19) relié à la membrane (4) de façon rigide et situé entre le système d'accroche (5) et la première zone de la membrane (6) ; et/ou
   - un déflecteur de queue (20) relié, de façon rigide, à un bout de la membrane et s'étendant au-delà de la seconde zone (8) de membrane.

10. Dispositif selon l'une quelconque des revendications précédentes, comportant au moins un renfort longitudinal (23) s'étendant le long de la membrane (4) entre les première et seconde zones (6, 8) de la membrane, ce renfort (23) étant adapté à accroître la résistance de la membrane à la flexion autour d'un axe de flexion s'étendant perpendiculairement à un plan de section longitudinale (P) de la membrane passant par ses première et seconde zones (6, 8).

11. Dispositif selon l'une au moins des revendications précédentes, dans lequel le dispositif comporte des renforts transversaux (24) s'étendant le long d'une face de cette membrane et perpendiculairement à un plan (P) de section longitudinale de la membrane passant par les première et seconde zones (6, 8), ces renforts transversaux étant adaptés à accroître la résistance de la membrane à la flexion autour d'un axe de flexion longitudinal (A-A) passant par les première et seconde zones de la membrane (6, 8).

12. Dispositif selon l'une quelconque des revendications précédentes, comportant des moyens de positionnement (25) du dispositif dans son environnement, ces moyens de positionnement (25) étant :

 - soit flottants (25a) et adaptés à positionner le dispositif dans l'écoulement par flottaison dans cet écoulement ;
 - soit lestés (25b) et adaptés à positionner le dispositif sur un sol limitant l'écoulement ; et

ces moyens de positionnement (25) étant reliés audit support par au moins une articulation (26) permettant d'orienter le support (3) par rapport à ces moyens de positionnement (26).

13. Dispositif selon l'une au moins des revendications précédentes, comportant :

 - des déflecteurs de support longitudinaux (27a), ces déflecteurs de support longitudinaux (27a) étant fixés au support (3) et s'étendant respectivement dans des plans parallèles entre eux et parallèles à un axe (A-A) passant par les première et secondes zones (6, 8) de la membrane (4), la membrane (4) étant disposée entre ces plans qui contiennent respectivement les déflecteurs de support longitudinaux (27a) ; et/ou
 - des premier et second déflecteurs de support transversaux (27b), ces déflecteurs de support transversaux (27b) étant fixés au support (3) et s'étendant dans un même plan, le premier déflecteur de support transversal (27b) étant parallèle à un bord avant de la membrane (4c) en vis-à-vis de la première zone de membrane (6) et le second déflecteur de support transversal (27b) étant parallèle à un bord arrière (4d) de la membrane en vis-à-vis de la seconde zone de membrane (8).

14. Dispositif selon l'une quelconque des revendications précédentes, dans lequel les moyens de récupération d'énergie comportent en outre des convertisseurs embarqués (16a, 16b) sur la membrane (4) et placés à l'écart dudit support (3), ces convertisseurs (16a, 16b) étant adaptés à transformer de l'énergie mécanique de déformation de la membrane en énergie électrique.

15. Dispositif selon l'une quelconque des revendications précédentes combinée à la revendication 2, dans lequel la raideur élastique longitudinale de la membrane va en augmentant en allant de la première zone (6) vers la seconde zone (8) de la membrane.

**Patentansprüche**

1. Vorrichtung (1) zur Energierückgewinnung in einer Fluidströmung (2), umfassend:

 - einen Träger (3);
 - eine flexible Membran (4);
 - ein Aufhängungssystem (5) zum Aufhängen mindestens einer ersten Zone (6) der Membran (4), das diese erste Zone (6) der Membran (4) mit dem Träger (3) verbindet;
 - einen Energiewandler (14);
 - Kraftübertragungsmittel (12), die mit einer zweiten Zone (8) der Membran (4) verbunden sind, die von der ersten Membranzone (6) entfernt ist, wobei diese zweite Membranzone (8) in Bezug auf den Träger (3) beweglich ist, und wobei diese Kraftübertragungsmittel (12) ausgebildet sind, um mechanische Energie von der zweiten Zone (8) zum Energiewandler (14) zu übertragen, **dadurch gekennzeichnet, dass**:
 - die Vorrichtung (1) Abstandsbegrenzungsmittel (9) umfasst, die dazu geeignet sind, den Abstand der ersten Membranzone (6) in Bezug auf mindestens einen ersten Punkt (10) des Aufhängungssystems (5) zu begrenzen und den Abstand der zweiten Membranzone (8) in Bezug auf einen zweiten Punkt (11) des Aufhängungssystems (5) zu begrenzen, wobei diese Abstandsbegrenzungsmittel (9) derart sind, dass die erste und die zweite Zone (6, 8) zueinander um einen minimalen Abstand (Dmin) beabstandet sind, der kleiner als die kürzeste Länge (Lmin) ist, die diese erste Zone und die zweite Zone (6, 8) trennt, gemessen entlang einer Seite (4e) der Membran, wobei diese Abstandsbegrenzungsmittel auf diese Weise eine Wellenbewegung der Membran begünstigen, wenn diese in der genannten Fluidströmung (2) platziert ist, wobei die flexible Membran eine elastische Längssteifigkeit aufweist, die sich ihrer Biegung zwischen ihrer ersten und ihrer zweiten Zone (6, 8) widersetzt.

2. Vorrichtung nach Anspruch 1, bei der die elastische Längssteifigkeit derart ist, dass die Membran eine Biegefestigkeit um Biegungsachsen (D-D) aufweist, die sich senkrecht zu einer Längsschnittebene (P) der Membran erstrecken, die durch die erste und die zweite Zone (6, 8) der Membran (4) hindurchgeht.

3. Vorrichtung nach einem der Ansprüche 1 oder 2, bei der die Abstandsbegrenzungsmittel (9) derart sind, dass die erste und die zweite Zone (6, 8) zueinander um einen minimalen Abstand (Dmin) beabstandet sind, der kleiner als 95% der kürzesten Länge (Lmin) ist, die diese erste und die zweite Zone (6, 8) trennt, gemessen entlang der genannten Seite (4e) der Membran (4).

4. Vorrichtung nach einem der Ansprüche 1 bis 3, bei der der Energiewandler (14), der mit den Kraftübertragungsmitteln (12) verbunden ist, auch mit dem Träger (3) verbunden und dazu geeignet ist, aus einer Relativbewegung der Kraftübertragungsmittel (12) in Bezug auf den Träger (3) eine Energie, wie z. B. eine elektrische Energie, zu erzeugen.

5. Vorrichtung nach Anspruch 4, bei der der Energiewandler (14) umfasst:

- Mittel zum Erzeugen einer Widerstandskraft gegenüber der Bewegung der Übertragungsmittel (12) in Bezug auf den Träger (3); und
- Mittel zum Steuern der Veränderung dieser Widerstandskraft.

6. Vorrichtung nach mindestens einem der vorhergehenden Ansprüche, **dadurch gekennzeichnet, dass** zumindest einige der Abstandsbegrenzungsmittel (9, 18a, 18b) mit mehreren Zwischenbefestigungspunkten (17a, 17b) zur Befestigung an der Membran verbunden sind, die sich zwischen der ersten und der zweiten Zone (6, 8) der Membran befinden, wobei diese Abstandsbegrenzungsmittel (9, 18a, 18b), die mit den Zwischenpunkten verbunden sind, ferner:

- dazu geeignet sind, den Abstand jedes dieser Zwischenpunkte (17a, 17b) in Bezug auf mindestens einen Punkt des Aufhängungssystems (5) zu begrenzen,
- die Beweglichkeit dieser Zwischenpunkte in Bezug auf den Träger (3) zu gestatten, und
- den Abstand zumindest einiger dieser Zwischenpunkte (17a, 17b) zueinander derart zu begrenzen, dass die Membran immer eine Länge (L1) aufweist, gemessen entlang der Seite (4e) der Membran und zwischen zwei dieser Zwischenpunkte, die immer größer als die Distanz (D1) ist, die diese beiden Zwischenpunkte (17a, 17b) trennt.

7. Vorrichtung nach Anspruch 6, bei der die Membran derart gewählt ist, dass, wenn die Vorrichtung in eine Wasserströmung eingetaucht ist, die eine Strömungsgeschwindigkeit zwischen 0,3 und 5 Metern pro Sekunde hat, die Membran im Längsschnitt gesehen eine vollständige Wellenbewegung und vorzugsweise eine halbe Wellenbewegung zwischen Zwischenpunkten (17a, 17b) der Membran aufweist, die aneinander angrenzen.

8. Vorrichtung nach mindestens einem der vorhergehenden Ansprüche, bei der:

- zumindest einige der Abstandsbegrenzungsmittel (18a, 18b) elastisch sind und mindestens ein Paar von Abstandsbegrenzungsmitteln (18a,18b) bilden, die jeweils eine Eigensteifigkeit (K1, K2) haben,
- wobei ein erstes der Begrenzungsmittel (18a) dieses Paares mit der Membran an einer ersten Stelle verbunden ist, die sich zwischen ihrer ersten und ihrer zweiten Zone (6, 8) befindet;
- wobei ein zweites der Begrenzungsmittel (18b) dieses Paares mit der Membran an einer zweiten Stelle verbunden ist, die sich zwischen der ersten Stelle und der zweiten Zone (6) der Membran befindet; und
- wobei die Eigensteifigkeit (K1) des ersten der Begrenzungsmittel (18a) dieses Paares größer als die Eigensteifigkeit (K2) des zweiten der Begrenzungsmittel (18b) dieses Paares ist.

9. Vorrichtung nach mindestens einem der vorhergehenden Ansprüche, ferner umfassend:

- einen Kopfdeflektor (19), der mit der Membran (4) starr verbunden ist und sich zwischen dem Aufhängungssystem (5) und der ersten Membranzone (6) befindet; und/oder
- einen Enddeflektor (20), der starr mit einem Ende der Membran verbunden ist und sich jenseits der zweiten Zone (8) der Membran erstreckt.

10. Vorrichtung nach einem der vorhergehenden Ansprüche, umfassend mindestens eine Längsverstärkung (23), die sich entlang der Membran (4) zwischen der ersten und der zweiten Zone (6, 8) der Membran erstreckt, wobei diese Verstärkung (23) dazu geeignet ist, den Widerstand der Membran gegenüber einer Biegung um eine Biegungssachse zu erhöhen, die sich senkrecht zu einer Längsschnittebene (P) der Membran erstreckt, die durch ihre erste und ihre zweite Zone (6, 8) hindurchgeht.

11. Vorrichtung nach mindestens einem der vorhergehenden Ansprüche, bei der die Vorrichtung Querverstärkungen (24) umfasst, die sich entlang einer Seite dieser Membran und senkrecht zu einer Längsschnittebene (P) der Membran erstrecken, die durch die erste und die zweite Zone (6, 8) hindurchgeht, wobei diese Querverstärkungen dazu geeignet sind, den Widerstand der Membran gegenüber der Biegung um eine Längsbiegungsachse (A-A) zu erhöhen, die durch die erste und die zweite Membranzone (6, 8) hindurchgeht.

12. Vorrichtung nach einem der vorhergehenden Ansprüche, umfassend Positionierungsmittel (25) zum Positionieren der Vorrichtung in ihrer Umgebung, wobei diese Positionierungsmittel (25) sind:

- entweder schwimmend (25a) und dazu geeignet, die Vorrichtung in der Strömung durch Schwimmfähigkeit in dieser Strömung zu positionieren;
- oder mit Ballast beladen (25b) und dazu geeignet, die Vorrichtung auf einem Boden, der die Strömung begrenzt, zu positionieren; und

wobei diese Positionierungsmittel (25) mit dem Träger über mindestens eine Gelenkverbindung (26) verbunden sind, die ein Ausrichten des Trägers (3) in Bezug auf diese Positionierungsmittel (26) ermöglicht.

13. Vorrichtung nach mindestens einem der vorhergehenden Ansprüche, umfassend:

- Längsträgerdeflektoren (27a), wobei diese Längsträgerdeflektoren (27a) am Träger (3) fixiert sind und sich jeweils in Ebenen erstrecken, die parallel zueinander und parallel zu einer Achse (A-A) sind, die durch die erste und die zweite Zone (6, 8) der Membran (4) hindurchgeht, wobei die Membran (4) zwischen diesen Ebenen angeordnet ist, die jeweils die Längsträgerdeflektoren (27a) enthalten; und/oder
- erste und zweite Querträgerdeflektoren (27b), wobei diese Querträgerdeflektoren (27b) am Träger (3) fixiert sind und sich in einer selben Ebene erstrecken, wobei der erste Querträgerdeflektor (27b) parallel zu einer Vorderkante der Membran (4c) gegenüber der ersten Membranzone (6) und der zweite Querträgerdeflektor (27b) parallel zu einer Hinterkante (4d) der Membran gegenüber der zweiten Membranzone (8) ist.

14. Vorrichtung nach einem der vorhergehenden Ansprüche, bei der die Energierückgewinnungsmittel ferner auf der Membran (4) getragene Wandler (16a, 16b) umfassen, die mit Abstand zum Träger (3) platziert sind, wobei diese Wandler (16a, 16b) geeignet sind, die mechanische Energie aus der Vorformung der Membran in elektrische Energie umzuwandeln.

15. Vorrichtung nach einem der vorhergehenden Ansprüche in Kombination mit Anspruch 2, bei der die elastische Längssteifigkeit der Membran von der ersten Zone (6) zur zweiten Zone (8) der Membran zunimmt.

**Claims**

1. A device (1) for recovering energy from a flow of fluid (2), including:

- a support (3);
- a flexible membrane (4);
- an attachment system (5) for attaching at least a first area (6) of the membrane (4), connecting this first area (6) of the membrane (4) to the support (3);
- an energy converter (14);
- force transmission means (12) connected to a second area (8) of the membrane (4) remote from the first area of the membrane (6), this second area of the membrane (8) being movable with respect to the support (3), and these force transmission means (12) being arranged to transmit mechanical energy from the second area (8) toward the energy converter (14), **characterized in that**:

- the device (1) includes separation limiting means (9), adapted to limit the separation of the first area of the membrane (6) from at least a first point (10) of the attachment system (5) and to limit the separation of the second area of the membrane (8) from a second point (11) of the attachment system (5), these separation limiting means (9) being such that the first and second areas (6, 8) are spaced apart from each other by a minimum distance (Dmin) smaller than the shortest length (Lmin) separating these first and second areas (6, 8) measured along a face (4e) of the membrane, these separation limiting means thus promoting an undulatory movement of the membrane when the latter is placed in said fluid flow (2), having a longitudinal elastic stiffness opposing its bending between its first and second areas (6, 8).

2. The device as claimed in claim 1, wherein said longitudinal elastic stiffness is such that the membrane has resistance to bending about bending axes (D-D) extending perpendicularly to a longitudinal sectional plane (P) of the membrane passing through the first and second areas (6, 8) of the membrane (4).

3. The device as claimed in any one of claims 1 or 2, wherein the separation limiting means (9) are such that the first and second areas (6, 8) are spaced apart from each other by a minimum distance (Dmin) of less than 95% of the shortest length (Lmin) separating these first and second areas (6, 8) measured along said face (4e) of the membrane (4).

4. The device as claimed in any one of claims 1 to 3, wherein the energy converter (14) connected to the force transmission means (12) is also connected to the support (3) and is adapted to generate energy, such as electrical energy, from a relative movement of the force transmission means (12) with respect to the support (3).

5. The device as claimed in claim 4, wherein the energy converter (14) includes:

- means for generating a force of resistance to the movement of the transmission means (12) with respect to the support (3); and
- means for controlling the variation of this resistive force.

6. The device as claimed in at least one of the preceding claims, **characterized in that** at least some of the separation limiting means (9, 18a, 18b) are connected to a plurality of intermediate points (17a, 17b) of attachment to the membrane, located between the first and second areas (6, 8) of the membrane, these separation limiting means (9, 18a, 18b) which are connected to the intermediate points also being:

- adapted to limit the separation of each of these intermediate points (17a, 17b) with respect to at least one point on the attachment system (5),
- adapted to allow the movement of these intermediate points with respect to the support (3), and
- adapted to limit the separation of at least some of these intermediate points (17a, 17b) from each other, in such a way that the membrane always has a length (L1), measured along said face (4e) of the membrane and between two of these intermediate points, which is always greater than the distance (D1) separating these two intermediate points (17a, 17b).

7. The device as claimed in claim 6, wherein the membrane is chosen in such a way that, when the device is immersed in a flow of water having a flow velocity in the range from 0.3 to 5 meters per second, the membrane as seen in longitudinal section has one complete undulation or preferably a half-undulation between intermediate points (17a, 17b) of the membrane which are adjacent to each other.

8. The device as claimed in at least one of the preceding claims, wherein:

- at least some of the separation limiting means (18a, 18b) are resilient and form at least one pair of separation limiting means (18a, 18b), each having a natural stiffness (K1, K2),
- a first limiting means (18a) of this pair being connected to the membrane at a first location between its first and second areas (6, 8);
- a second limiting means (18b) of this pair being connected to the membrane at a second location between the first location and the second area (6) of the membrane; and
- the natural stiffness (ski) of the first of the limiting means (18a) of this pair being greater than the natural stiffness (K2) of the second of the limiting means (18b) of this pair.

9. The device as claimed in at least one of the preceding claims, further including:

- a head deflector (19) connected to the membrane (4) in a rigid fashion and located between the attachment system (5) and the first area of the membrane (6), and/or
- a tail deflector (20) connected in a rigid fashion to one end of the membrane and extending beyond the second membrane area (8).

10. The device as claimed in any one of the preceding claims, including at least one longitudinal reinforcer (23) extending along the membrane (4) between the first and second areas (6, 8) of the membrane, this reinforcer (23) being adapted to increase the resistance of the membrane to bending about a bending axis extending perpendicularly to a longitudinal sectional plane (P) of the membrane passing through its first and second areas (6, 8).

11. The device as claimed in at least one of the preceding claims, wherein the device includes transverse reinforcers (24) extending along a face of this membrane and perpendicularly to a longitudinal sectional plane (P) of the membrane passing through the first and second areas (6, 8), these transverse reinforcers being adapted to increase the resistance of the membrane to bending about a longitudinal bending axis (A-A) passing through the first and second areas of the membrane (6, 8).

12. The device as claimed in any one of the preceding claims, including means (25) for positioning the device in its environment, these positioning means (25) being:

- either buoyant (25a) and adapted to position the device in the flow by buoyancy in this flow;
- or ballasted (25b) and adapted to position the device on a ground which limits the flow,

these positioning means (25) being connected to said support by at least one hinge (26) enabling the support (3) to be oriented with respect to these positioning means (26).

13. The device as claimed in at least one of the preceding claims, including:

- longitudinal supporting deflectors (27a), these longitudinal supporting deflectors (27a) being fixed to the support (3) and extending, respectively, in planes parallel to each other and parallel to an axis (A-A) passing through the first and second areas (6, 8) of the membrane (4), the membrane (4) being arranged between these planes which contain the respective longitudinal supporting deflectors (27a); and/or
- first and second transverse supporting deflectors (27b), these transverse supporting deflectors (27b) being fixed to the support (3) and extending in the same plane, the first transverse supporting deflector (27b) being parallel to a front edge of the membrane (4c) opposite the first membrane area (6), and the second transverse supporting deflector (27b) being parallel to a rear edge (4d) of the membrane opposite the second membrane area (8).

14. The device as claimed in any one of the preceding claims, wherein the energy recovery means further include on-board converters (16a, 16b) on the membrane (4), placed at a distance from said support (3), these converters (16a, 16b) being adapted to transform the mechanical energy of deformation of the membrane into electrical energy.

15. The device as claimed in any one of the preceding claims combined with claim 2, wherein the longitudinal elastic stiffness of the membrane increases from the first area (6) toward the second area (8) of the membrane.

Fig.1

Fig.2

Fig.3

Fig.4

Fig.5

Fig.6

Fig.7

Fig.8

Fig.9

Fig.10

Fig.11

Fig.12

Fig.13

18a    9    17b  18b

5a

13a

5a

13b

4

Fig.14

D1

L1

5a

K1    K2    K3

13b

6

4    17a    17b    8    P

5b

K1    K2    K3

Fig.15

20    A-A    P

4    8

5a

6

X-X

19    17b

5b

Fig.16

23

5a

13b

6    4    A-A

5b

13a    P

17b

Fig.17

Fig.18

Fig.19

Fig.20

Fig.21

## Fig.22

## Fig.23

## Fig.24

Fig. 25a

Fig. 25b

Fig. 26

**EP 2 686 542 B1**

**RÉFÉRENCES CITÉES DANS LA DESCRIPTION**

**Documents brevets cités dans la description**

- WO 8200321 A

- CA 2675947